# FASCICULE DE BREVET EUROPEEN

(11) **EP 3 762 670 B1**
(45) Date de publication et mention de la délivrance du brevet: **30.03.2022**
(21) Numéro de dépôt: 19709488.1
(22) Date de dépôt: 08.03.2019
(51) Int. Cl.: B23K 11/00, B23K 11/16, B23K 11/34, B23K 26/00, B23K 26/362, B23K 26/342, B23K 26/40, B23K 26/60, B23K 101/14, B23K 103/12, B33Y 10/00, B33Y 80/00, F28D 9/00, F28D 17/02, F28F 3/08, F28F 7/02

(54) **ECHANGEUR THERMIQUE, AINSI QUE PROCÉDÉ DE FABRICATION D'UN TEL ÉCHANGEUR THERMIQUE**
WÄRMEÜBERTRAGER UND HERSTELLUNGSVERFAHREN DAFÜR
HEAT EXCHANGER AND ITS MANUFACTURING METHOD

(30) Priorité: 09.03.2018 FR 1852050
(43) Date de publication de la demande: 13.01.2021
(73) Titulaire: Inetyx, 63119 Châteaugay (FR)
(72) Inventeur: TEULET, Patrick, 63200 RIOM (FR); COTTIER, Emile, 63260 BUSSIERES ET PRUNS (FR)
(74) Mandataire: Lavoix
(86) Numéro de dépôt international: PCT/EP2019/055865
(87) Numéro de publication internationale: WO 2019/170868

(56) Documents cités:
- DE-A1- 19 740 502
- DE-A1-102007 048 206
- FR-A1- 3 046 559
- US-A1- 2004 098 854
- US-A1- 2004 099 712
- US-A1- 2015 137 412

## Description

La présente invention concerne un échangeur thermique. Elle concerne également un procédé de fabrication d'un tel échangeur thermique.

L'invention s'intéresse à la fois aux échangeurs thermiques de type récupérateur et aux échangeurs thermiques de type régénérateur. La fonction principale d'un échangeur thermique de type récupérateur est de permettre le transfert d'énergie thermique au travers de parois de l'échangeur, entre un premier fluide et un deuxième fluide qui traversent l'échangeur, sans qu'il n'y ait de mélange entre les deux fluides. Les deux fluides mis en œuvre dans ce cadre peuvent avoir des caractéristiques physiques et chimiques différentes. La fonction principale d'un échangeur thermique de type régénérateur est, d'une part, de stocker dans ses parois de l'énergie thermique fournie par un fluide qui le traverse et, d'autre part, de restituer ensuite l'énergie thermique ayant été stockée dans ses parois à un fluide qui traverse l'échangeur.

Les performances des échangeurs thermiques, qu'ils soient récupérateurs ou régénérateurs, sont directement liées à la géométrie de leurs canaux de circulation de fluide, ainsi qu'à la nature des matériaux constituant ces échangeurs. Généralement, on caractérise les échangeurs thermiques selon le rapport entre la surface d'échange qu'ils présentent et le volume d'échange qu'ils ont. Par exemple, pour un échangeur à plaques et ailettes en acier, ce rapport vaut habituellement 2000 m²/m³ environ, les plaques de cet échangeur ayant typiquement une épaisseur comprise entre 0,5 et 1 mm tandis que ses ailettes ont une épaisseur typiquement comprise entre 0,15 et 0,75 mm.

US 2004/099712, US 2004/098854 et DE 10 2007 048206 proposent des échangeurs à structure multicouches dont les canaux de circulation de fluide sont délimités par des bandes métalliques déposées et solidarisées sur une plaque. La plaques est prévue suffisamment « large » pour y positionner les bandes « fines » formant les bords latéraux de chaque canal, et pour former avec ces bandes un sous-ensemble qui permet, par empilement avec d'autres sous-ensembles du même type, d'obtenir une structure fonctionnelle multicouches sous réserve que l'assemblage des sous-ensembles entre eux soit réalisé avec des précautions, notamment en soulageant ou en renforçant la structure pour éviter sa déformation lors de cet assemblage.

Ces divers échangeurs et, plus généralement, les échangeurs thermiques disponibles sur le marché ont souvent une configuration qui a l'inconvénient de voir leurs pertes de charge augmenter tandis que le débit de la section de passage pour le ou les fluides diminue. Ces pertes de charge sont aussi liées à l'état de surface des parois de l'échangeur, au travers desquelles s'opère l'échange thermique et contre lesquelles s'écoulent le ou les fluides.

Le but de la présente invention est de proposer un nouvel échangeur thermique ayant des performances améliorées.

A cet effet, l'invention a pour objet un échangeur thermique, tel que défini à la revendication 1.

L'idée à la base de l'invention est de délimiter les canaux dans lesquels circule le fluide par des couches superposées, qui sont constituées chacune de bandes métalliques et qui sont soudées par fusion les unes aux autres. En particulier, chaque canal est délimité par les faces, en regard l'une de l'autre, de deux couches séparées l'une de l'autre par une seule couche intercalée qui délimite le reste du canal : en d'autres termes, la section transversale des canaux, dans un plan de coupe perpendiculaire à l'axe longitudinal du canal, est constituée à la fois de deux côtés rectilignes opposés, qui sont respectivement formés par les deux couches séparées précitées, et de deux autres côtés opposés, qui sont respectivement formés par la bordure de bandes de la couche intercalée précitée. En pratique, cette section peut typiquement être rectangulaire. On comprend que l'aire de la section transversale des canaux peut ainsi présenter une valeur faible, qui est directement liée à l'épaisseur de la couche intercalée précitée et à l'écartement entre les bordures précitées des bandes de cette couche intercalée, tandis que les canaux peuvent s'étendre sur une très grande étendue longitudinale : pour de tels canaux, le rapport de la surface d'échange, c'est-à-dire de l'aire de la paroi des canaux, sur le volume d'échange, c'est-à-dire le volume des canaux, peut alors être très élevé, typiquement supérieur à 10 000 m²/m³. Ces canaux peuvent ainsi être qualifiés de microcanaux et l'échangeur thermique de l'invention peut ainsi être qualifié de microéchangeur. A titre d'exemple, la hauteur de chaque canal, autrement dit l'épaisseur de la couche intercalée précitée, peut être égale ou inférieure à 0,1 mm et/ou la largeur de chaque canal, autrement dit l'écartement entre les bordures précitées des bandes de la couche intercalée précitée, peut être égale ou inférieure à 1 mm. Ceci étant, l'invention n'exclut pas, notamment pour des raisons de productivité, que la hauteur et/ou la largeur de chaque canal puissent être plus grandes, en étant par exemple respectivement égales à 0,5 mm et 5 mm, voire davantage, moyennant le recours à des bandes métalliques suffisamment épaisses, sous réserve de disposer d'une puissance de fusion adaptée, notamment une puissance laser adaptée, pour pouvoir souder par fusion les couches comme prévu par l'invention.

Les échanges entre la paroi des canaux de l'échangeur conforme à l'invention et le fluide qui circule dans ces canaux sont ainsi maximisés, tout en limitant le volume d'échange pour ne pas impacter les performances thermodynamiques du dispositif dans lequel l'échangeur est intégré, tel qu'un moteur de Stirling dont la puissance diminue lorsqu'augmente le volume d'échange, autrement appelé « volume mort » du fait qu'il correspond à la quantité de fluide présente dans les canaux à chaque instant de fonctionnement.

De plus, le fait d'utiliser des couches de bandes métalliques, qui, par groupe de trois couches superposées, délimitent chaque canal de l'échangeur thermique conforme à l'invention, permet de maîtriser l'état de surface de la paroi des canaux, en particulier l'état de surface des deux faces délimitant chaque canal, formées par les deux couches séparées par la couche intercalée précitée. En particulier, la rugosité de surface Ra peut être égale ou inférieure à 0,8 µm, voire égale ou inférieure à 0,3 µm. De cette façon, les pertes de charge pour le fluide circulant dans les canaux sont limitées et l'épaisseur de couche limite pour le fluide contre la paroi des canaux est réduite, ce qui accroît l'échange thermique.

En outre, l'invention prévoit que les couches superposées de l'échangeur thermique, qui, par groupe de trois couches superposées, délimitent chaque canal, sont soudées les unes aux autres de part et d'autre de chaque canal et tout le long de ce canal. Chaque canal est ainsi étanché de manière fiable. De plus, ces soudures sont réalisées par fusion directe des couches entre elles, ce qui revient à dire que ces soudures sont opérées sans métal d'apport : cela garantit, à la fois, que chaque canal présente une grande résistance à la pression et que la conductivité thermique est maîtrisée par continuité métallurgique.

Des caractéristiques additionnelles avantageuses de l'échangeur conforme à l'invention sont spécifiées aux revendications 2 à 5.

L'échangeur thermique conforme à l'invention peut être conçu en tant qu'échangeur récupérateur, en permettant un échange thermique, au travers des couches constituant cet échangeur, entre deux fluides qui traversent distinctement l'échangeur. Pour ce faire, l'invention prévoit que cet échangeur récupérateur est conforme à la revendication 6.

L'invention permet ainsi que le corps de l'échangeur, constitué des couches de bandes métalliques, puisse présenter une conductivité thermique très élevée, par exemple de l'ordre de 300 W/m.°K lorsque les bandes des couches sont en cuivre ou en alliage à base de cuivre, tel que CuZn₂ : une telle valeur élevée de la conductivité thermique diminue la différence de température entre les deux fluides traversant l'échangeur et augmente donc l'efficacité de l'échangeur récupérateur. Cet effet est d'autant plus marqué que cette valeur de la conductivité thermique est conservée pour l'ensemble de l'échangeur grâce à la continuité métallurgique résultant du soudage par fusion entre les couches de l'échangeur. De plus, la structure à couches de l'échangeur récupérateur conforme à l'invention permet de limiter l'épaisseur de matière séparant les premier et second canaux, ce qui facilite les échanges thermiques entre les deux fluides, étant rappelé que la résistance thermique d'une paroi est proportionnelle à l'épaisseur de cette dernière.

Des caractéristiques additionnelles avantageuses de l'échangeur récupérateur conforme à l'invention sont spécifiées aux revendications 7 et 8.

L'invention a également pour objet un procédé de fabrication d'un échangeur récupérateur tel que défini ci-dessus, ce procédé étant défini à la revendication 9.

Par ailleurs, l'échangeur thermique conforme à l'invention peut être conçu en tant qu'échangeur régénérateur, en permettant un échange thermique entre le fluide et une paroi de l'échangeur en deux temps : dans un premier temps, le fluide circule à l'intérieur des canaux de sorte qu'un échange thermique est réalisé depuis le fluide vers la paroi et l'énergie thermique est stockée dans celle-ci ; après que le fluide ait, à l'extérieur de l'échangeur, subi une transformation, notamment de type température, pression ou changement de phase, le fluide circule, dans un second temps, en sens inverse dans l'échangeur de manière que la paroi de ce dernier restitue au fluide tout ou partie de l'énergie thermique qui y avait été stockée dans le premier temps. Pour ce faire, l'invention prévoit que cet échangeur régénérateur est conforme à la revendication 10.

L'invention permet d'obtenir, au sein de l'échangeur régénérateur, une conductivité thermique anisotrope grâce à l'alternance, dans chaque couche, de bandes dont les métaux respectifs présentent des conductivités thermiques différentes l'une de l'autre, cette alternance des bandes étant prévue parallèlement au sens d'écoulement du fluide dans les canaux que les couches de l'échangeur délimitent par groupe de trois couches superposées. Cette alternance de bandes conductrices et isolantes dans chaque couche permet que la conductivité thermique longitudinale de l'échangeur, c'est-à-dire la conductivité thermique parallèle à la direction de l'alternance des bandes de chaque couche, soit minimale et que, en particulier comparativement, la conductivité thermique transversale de l'échangeur, c'est-à-dire la conductivité thermique perpendiculaire à la direction de l'alternance des bandes de chaque couche, soit maximale. En limitant la conductivité thermique longitudinale de l'échangeur régénérateur conforme à l'invention, en particulier comparativement à un échangeur qui ne serait constitué que d'un seul métal ayant une conductivité thermique intermédiaire entre les conductivités thermiques respectives des deux métaux utilisés pour l'échangeur régénérateur de l'invention, on réduit les pertes d'énergie thermique par conduction dans les couches de l'échangeur entre les deux côtés opposés de ces derniers sur lesquels débouchent les canaux : dans la mesure où, en service, l'échangeur régénérateur est associé à une source chaude et une source froide, telles que des récupérateurs chaud et froid, qui sont respectivement prévues aux extrémités opposées des canaux et entre lesquelles circule le fluide via les canaux de l'échangeur, la minimisation de la conductivité thermique longitudinale permet de limiter les fuites thermiques, au travers de l'échangeur régénérateur, entre ces sources chaude et froide ; en particulier, en alternant les bandes isolantes et conductrices dans les couches de l'échangeur, le stockage de l'énergie entre la source chaude et la source froide est maximisé, en créant des paliers de température se rapprochant d'une évolution linéaire de la température depuis la température froide de la source froide jusqu'à la température chaude de la source chaude, tout en minimisant les pertes par conduction dans les couches de l'échangeur régénérateur. En élevant la conductivité thermique transversale, en particulier comparativement à un échangeur qui ne serait constitué que d'un seul métal ayant une conductivité thermique intermédiaire entre les conductivités thermiques respectives des deux métaux utilisés pour l'échangeur régénérateur de l'invention, on élève, à la fois, l'effusivité thermique de l'échangeur régénérateur, c'est-à-dire la capacité de ce dernier à échanger de l'énergie thermique avec son environnement, et la dynamique d'échange, appelée diffusivité, c'est-à-dire la capacité de l'échangeur à transmettre un signal de température d'un point à un autre, en lien avec sa conductivité thermique et sa capacité thermique, en particulier comparativement à un échangeur qui ne serait constitué que d'un seul métal ayant une conductivité thermique intermédiaire entre les conductivités thermiques respectives des deux métaux utilisés pour l'échangeur régénérateur de l'invention.

Des caractéristiques additionnelles avantageuses de l'échangeur régénérateur conforme à l'invention sont spécifiées aux revendications 11 et 12.

L'invention a également pour objet un procédé de fabrication d'un échangeur régénérateur tel que défini plus haut, ce procédé étant défini à la revendication 13.

Une caractéristique additionnelle avantageuse de ce procédé est définie à la revendication 14.

L'invention sera mieux comprise à la lecture de la description qui va suivre, donnée uniquement à titre d'exemple et faite en se référant aux dessins sur lesquels :
- la figure 1 est une vue en élévation d'un premier mode de réalisation d'un échangeur thermique conforme à l'invention, à savoir un échangeur récupérateur ;
- la figure 2 est une vue en perspective d'une partie, encadrée II sur la figure 1, de l'échangeur de la figure 1 ;
- la figure 3 est une section partielle dans le plan III de la figure 2 ;
- la figure 4 est une vue en perspective illustrant une première étape d'un procédé de fabrication de l'échangeur de la figure 1 ;
- les figures 5 à 8 sont des vues similaires à la figure 4, illustrant respectivement des étapes successives du procédé de fabrication ;
- la figure 9 est une section selon le plan IX de la figure 8, illustrant une étape du procédé de fabrication, mise en oeuvre après celle illustrée par la figure 8 ;
- la figure 10 est une vue similaire à la figure 9, illustrant une autre étape du procédé de fabrication, subséquente à celle illustrée par la figure 9 ;
- la figure 11 est une vue en élévation d'un second mode de réalisation d'un échangeur thermique conforme à l'invention, à savoir d'un échangeur régénérateur ;
- la figure 12 est une vue en perspective d'une partie, encadrée XII sur la figure 11, de l'échangeur de la figure 11 ;
- la figure 13 est une section partielle dans le plan XIII de la figure 12 ;
- la figure 14 est une vue en perspective illustrant une première étape d'un procédé de fabrication de l'échangeur de la figure 11 ;
- la figure 15 est une vue similaire à la figure 14, illustrant une variante de mise en œuvre de l'étape illustrée à la figure 14 ; et
- les figures 16 à 20 sont des vues similaires à la figure 14, illustrant respectivement des étapes successives du procédé de fabrication.

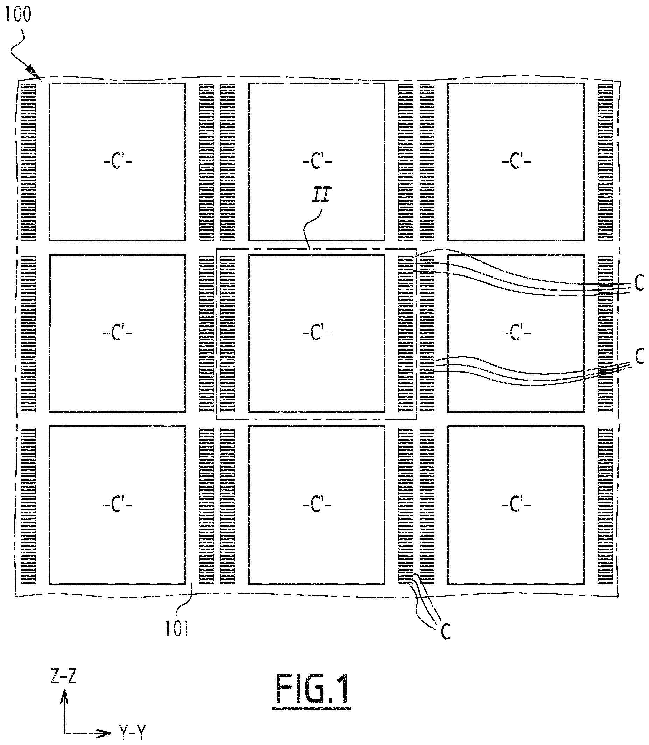

Sur les figures 1 à 3 est représenté un échangeur thermique 100. Cet échangeur 100 est un échangeur récupérateur, qui permet un transfert d'énergie thermique au travers d'un corps 101 de l'échangeur, entre un premier fluide et un deuxième fluide qui traversent le corps 101, sans qu'il n'y ait de mélange entre les premier et deuxième fluides.

Comme détaillé par la suite, le corps 101 est de nature métallique et présente une forme tridimensionnelle qui sera décrite en référence à un repère orthogonal d'axes référencés respectivement X-X, Y-Y et Z-Z.

L'échangeur 100 comporte à la fois des canaux C, destinés à la circulation du premier fluide, et des canaux C', destinés à la circulation du deuxième fluide. Comme détaillé par la suite, les canaux C et C' sont délimités par le corps 101 de l'échangeur, en s'étendant en longueur parallèlement les uns aux autres, suivant l'axe X-X, chacun de ces canaux C et C' reliant l'une à l'autre des extrémités respectives du canal, opposées l'une à l'autre selon l'axe X-X. En service, c'est-à-dire lorsque l'échangeur 100 est alimenté avec le premier fluide et avec le deuxième fluide en vue de réaliser un échange thermique entre ces deux fluides, le premier fluide circule librement dans les canaux C, entre les extrémités axiales opposées de chacun de ces canaux C, tandis que le deuxième fluide circule librement dans les canaux C', entre les extrémités axiales opposées de chacun de ces canaux C'.

Dans l'exemple de réalisation considéré sur les figures 1 à 3, les canaux C de l'échangeur 100 présentent tous la même section transversale, c'est-à-dire la section dans un plan perpendiculaire à leur axe X-X, qui est différente de la même section transversale que présentent les canaux C'. Plus précisément, dans l'exemple considéré ici, la section transversale des canaux C' est plus grande que la section transversale des canaux C : en pratique, pour des raisons dont l'intérêt apparaîtra plus loin, les canaux C et C' sont alignés suivant l'axe Z-Z et sont agencés les uns par rapport aux autres, au sein du corps 101 de l'échangeur 100, de manière à former un motif associant un des canaux C' et plusieurs des canaux C qui sont agencés à un même niveau, selon l'axe Z-Z, que le canal C' du motif, les canaux C du motif étant soit disposés tous d'un même côté axial, selon l'axe Y-Y, des canaux C' du motif, soit répartis, notamment par moitié, des deux côtés, selon l'axe Y-Y, du canal C' du motif, comme dans l'exemple considéré sur les figures. Le motif précité peut être répété plusieurs fois au sein de l'échangeur 100, aussi bien dans la direction de l'axe Y-Y que dans la direction de l'axe Z-Z : dans l'exemple montré à la figure 1, le motif considéré associe un des canaux C' et cent-dix canaux C, dont cinquante-cinq sont situés sur un côté, selon l'axe Y-Y, du canal C' considéré tandis que les cinquante-cinq autres canaux C sont situés de l'autre côté axial, selon l'axe Y-Y, du canal C' considéré, ce motif étant répété au moins neuf fois, à savoir au moins trois fois suivant l'axe Z-Z et au moins trois fois suivant l'axe Y-Y.

A titre d'exemple non limitatif, qui est approprié au motif associant cent-dix canaux C et un canal C', montré sur les figures 1 à 3, le premier fluide précité est de l'hélium gazeux, circulant dans les canaux C à une pression moyenne de 25 bars environ, tandis que le deuxième fluide précité est une huile caloporteur, circulant dans les canaux C' à une pression moyenne d'un bar environ et à une température de l'ordre de 600°K, la température du deuxième fluide étant abaissée lors de sa circulation au travers du corps 101 de manière à céder une puissance thermique au premier fluide.

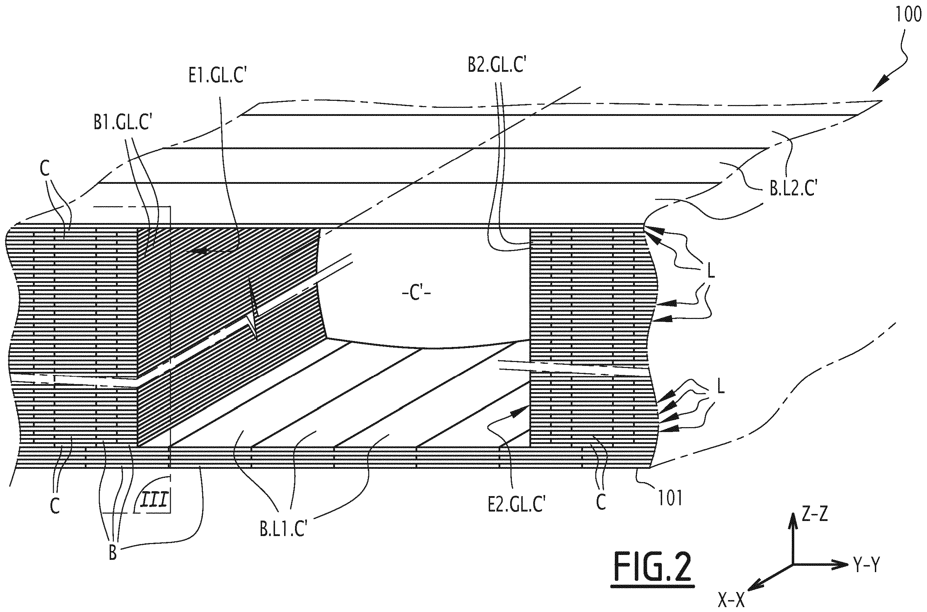

En revenant maintenant à la description du corps 101 de l'échangeur 100, la figure 2 montre que ce corps 101 est constitué d'une pluralité de couches L, qui sont planes, en s'étendant chacune dans des plans géométriques perpendiculaires à l'axe Z-Z, et qui sont superposées les unes aux autres selon l'axe Z-Z. Chaque couche L est constituée de bandes métalliques B : les bandes B d'une même couche L s'étendent toutes en longueur suivant une direction qui est perpendiculaire à l'axe Z-Z et sont adjacentes les unes aux autres, sans nécessairement être jointives, dans le plan de la couche considérée, chacune des bandes B de chaque couche L étant prévue pour occuper toute l'épaisseur, selon l'axe Z-Z, de la couche correspondante. Toutes les bandes B sont réalisées en métal, en particulier en cuivre ou en un alliage à base de cuivre, tel que CuZn2. De plus, comme détaillé par la suite, les couches L du corps 101 sont solidaires les unes des autres, en étant soudées par fusion les unes aux autres : plus précisément, n'importe quelle couche L du corps 101 et la couche L directement superposée à celle-ci sont soudées par fusion l'une à l'autre, et ce sans métal d'apport et par fusion uniquement partielle des bandes en prenant soin que les parties respectives des bandes, qui n'ont pas été fusionnées, conservent leur géométrie d'arête et demeurent en appui, selon l'axe Z-Z, l'une contre l'autre, afin de conserver une continuité métallurgique entre les couches, comme expliqué en détail dans WO 2017/121746 auquel le lecteur peut se reporter pour plus d'explications à cet égard. On retiendra que, dans la mesure où les couches L sont soudées par fusion les unes aux autres, sans métal d'apport, le corps 101 de l'échangeur 100 est intégralement constitué du métal des bandes B de ces couches L.

Les couches L du corps 101 sont agencées de manière à définir à la fois les canaux C, comme détaillé juste ci-dessous, et les canaux C', comme détaillé plus loin.

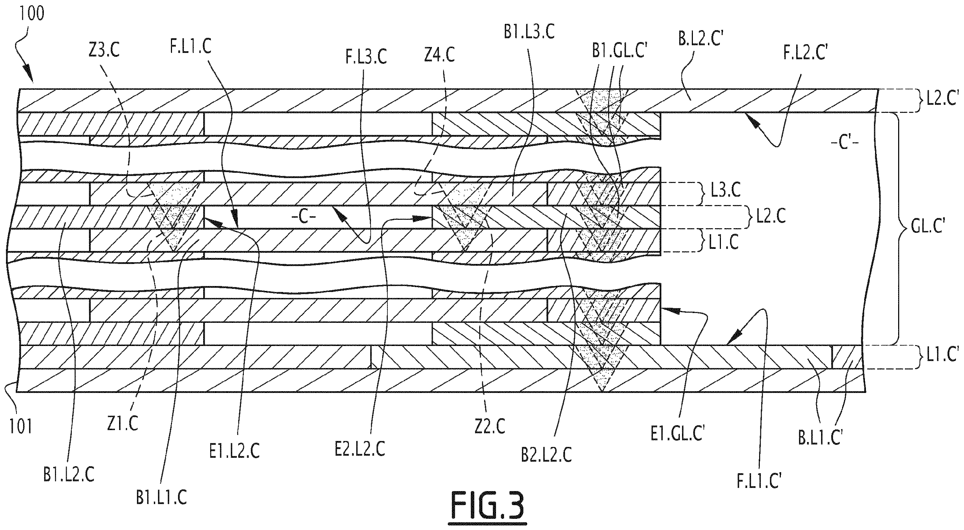

Ainsi, comme bien visible sur la figure 3, chaque canal C est défini en totalité par trois couches, directement superposées les unes aux autres, parmi les couches L du corps 101. Si on considère plus avant, par exemple, le canal C qui est représenté en entier au milieu de la figure 3, ce canal C est exclusivement défini par :
- une première couche L, notée L1.C sur la figure 3,
- une deuxième couche L, notée L2.C, qui est directement superposée à la couche L1.C selon l'axe Z-Z, et
- une troisième couche L, notée L3.C, qui est directement superposée sur la couche L2.C.

La couche L2.C est ainsi intercalée, selon l'axe Z-Z, directement entre les couches L1.C et L3.C.

Selon l'axe Z-Z, le canal C considéré ci-dessus est délimité exclusivement par les couches L1.C et L3.C. Plus précisément, la couche L1.C présente une face F.L1.C, qui est tournée, selon l'axe Z-Z, vers les couches L2.C et L3.C et qui, pour la couche L1.C, délimite le canal C. Dans l'exemple de réalisation considéré ici, la face F.L1.C est formée par une bande B1.L1.C de la couche L1.C, qui s'étend en longueur selon l'axe X-X et qui, comme bien visible sur la figure 3, déborde de part et d'autre, selon l'axe Y-Y, du canal C. La couche L3.C présente, quant à elle, une face F.L3.C, qui est tournée, selon l'axe Z-Z, vers les couches L1.C et L2.C, en faisant ainsi face, selon l'axe Z-Z, à la face F.L1.C, et qui, pour la couche L3.C, délimite le canal C. Dans l'exemple de réalisation considéré ici, cette face F.L3.C est formée par une bande B1.L3.C de la couche L3.C, qui s'étend en longueur selon l'axe X-X et qui, comme bien visible sur la figure 3, déborde de part et d'autre, suivant l'axe Y-Y, du canal C. Les faces F.L1.C et F.L3.C sont ainsi agencées en regard l'une de l'autre, selon l'axe Z-Z, en étant écartées l'une de l'autre d'une distance correspondant à la dimension, selon l'axe Z-Z, du canal C.

Selon l'axe Y-Y, le canal C considéré ci-dessus est délimité exclusivement par la couche L2.C, plus précisément par deux bords E1.L2.C et E2.L2.C de cette couche L2.C, qui sont disposés parallèlement à l'axe X-X et transversalement au plan de la couche L2.C. Les bords E1.L2.C et E2.L2.C sont en regard l'un de l'autre suivant l'axe Y-Y, en étant écartés d'une distance correspondant à la dimension, selon l'axe Y-Y, du canal C. Le bord E1.L2.C est formé par une bande B1.L2.C de la couche L2.C, qui s'étend en longueur selon l'axe X-X, sur l'un des deux côtés axiaux, selon l'axe Y-Y, du canal C. Le bord E2.L2.C est, quant à lui, formé par une autre bande de la couche L2.C, référencée B2.L2.C, qui, comme la bande B1.L2.C, s'étend en longueur selon l'axe X-X mais qui est situé du côté axial, selon l'axe Y-Y, du canal C opposé au côté axial de ce dernier où est située la bande B1.L2.C. Ainsi, les bandes B1.L2.C et B2.L2.C de la couche L2.C, qui forment respectivement les bords E1.L2.C et E2.L2.C délimitant le canal C au niveau de la couche L2.C, s'étendent en longueur respectivement de part et d'autre, selon l'axe Y-Y, du canal C.

En pratique, dans la mesure où les bandes B de chaque couche C s'étendent dans le plan de leur couche correspondante, en occupant toute l'épaisseur de cette dernière, on comprend que c'est l'une des deux faces principales de la bande B1.L1.C qui forme la face F.L1.C et que c'est l'une des deux faces principales de la bande B1.L3.C qui forme la face F.L3.C, tandis que c'est l'une des deux tranches latérales de la bande B1.L2.C qui forme le bord E1.L2.C et c'est l'une des deux tranches latérales de la bande B2.L2.C qui forme le bord E2.L2.C.

Afin d'étancher le canal C et d'en garantir la résistance à la pression, les bandes B1.L2.C et B2.L2.C sont, d'une part, soudées par fusion à la couche L1.C sur des zones de fusion respectives Z1.C et Z2.C, qui s'étendent de manière continue sur toute la longueur du canal entre les extrémités de ce dernier opposées l'une à l'autre selon l'axe X-X et qui, comme bien visible sur la figure 3, sont situées, selon l'axe Y-Y, de part et d'autre du canal C, et d'autre part, soudées par fusion à la couche L3.C sur des zones de fusion respectives Z3.C et Z4.C qui, elles aussi, s'étendent de manière continue sur toute la longueur du canal entre ses extrémités opposées et qui sont situées, selon l'axe Y-Y, de part et d'autre du canal C. Dans l'exemple de réalisation considéré sur les figures, comme bien visible sur la figure 3, les zones de fusion Z1.C et Z2.C sont respectivement prévues entre les parties latérales de la bande B1.L1.C, qui débordent de part et d'autre, selon l'axe Y-Y, du canal C et, respectivement, la bande B1.L2.C et la bande B2.L2.C, tandis que les zones de fusion Z3.C et Z4.C sont respectivement réalisées entre les parties de la bande B1.L3.C, qui débordent de part et d'autre, selon l'axe Y-Y, du canal C, et, respectivement, la bande B1.L2.C et la bande B2.L2.C.

Les considérations qui précèdent concernant la délimitation du canal C considéré ci-dessus s'appliquent à chacun des autres canaux C du corps 101, du fait de l'empilement des couches L de ce corps selon l'axe Z-Z, étant entendu que la couche surplombant les deux autres couches du groupe des trois couches définissant un canal donné parmi les canaux C, autrement dit la troisième couche pour ce canal telle que la couche L3.C pour le canal C considéré ci-dessus, forme la première couche du canal suivant dans l'empilement, c'est-à-dire la couche surplombée par les deux autres couches du groupe de trois couches définissant le canal à l'aplomb du canal précité. En particulier, hormis pour les deux canaux C les plus éloignés l'un de l'autre suivant l'axe Z-Z au sein d'un même motif de l'échangeur 100, chacun des canaux C peut être exclusivement délimité par les faces respectives, tournées l'une vers l'autre selon l'axe Z-Z, de deux bandes similaires aux bandes B1.L1.C et B1.L3.C, et par les tranches latérales respectives, en regard l'une de l'autre selon l'axe Y-Y, de deux bandes similaires aux bandes B1.L2.C et B2.L2.C. Pour des raisons liées notamment à la fabrication du corps 101, la première couche du canal C surplombée par les autres canaux C d'un même motif, peut s'écarter des considérations qui précèdent, tout en étant constituée des bandes B mais ayant une disposition, au sein de cette couche, qui est différente de celle des bandes B au sein des premières couches respectives des autres canaux C. De même, la troisième couche du canal C surplombant tous les autres canaux C d'un même motif peut ne pas présenter les mêmes aménagements que ceux décrits plus haut pour le canal C, tout en étant constituée de bandes B ayant une disposition différente de celle des bandes B de la troisième couche des autres canaux C. Dans tous les cas, des zones de fusion, similaires aux zones Z1.C, Z2.C, Z3.C et Z4.C pour le canal C considéré en détail plus haut, sont prévues entre les trois couches associées à chacun des canaux C, étant remarqué que, pour des raisons de visibilité, ces diverses zones de fusion hormis les zones Z1.C, Z2.C, Z3.C et Z4.C ne sont pas montrées sur la figure 3.

Pour ce qui concerne les canaux C', chacun d'eux est défini conjointement par au moins cinq couches, directement superposées les unes aux autres, parmi les couches L du corps 101, voire par bien davantage que cinq couches directement superposées. Ainsi, si on considère plus avant, par exemple, le canal C' qui est représenté en entier sur la figure 2 et en partie sur la figure 3, ce canal C' est exclusivement défini par :
- une première couche L, notée L1.C' sur la figure 3,
- une seconde couche L, notée L2.C', et
- un groupe de plusieurs couches superposées L, noté GL.C', qui est intercalé, selon l'axe Z-Z, directement entre les couches L1.C' et L2.C'.

Selon l'axe Z-Z, le canal C' considéré ci-dessus est délimité exclusivement par les couches L1.C' et L2.C'. Plus précisément, la couche L1.C' présente une face F.L1.C', qui est tournée, selon l'axe Z-Z, vers le groupe de couches superposées GL.C' et la couche L2.C' et qui, pour la couche L1.C', délimite le canal C'. Dans l'exemple de réalisation considéré ici, cette face F.L1.C' est formée par des bandes B.L1.C' de la couche L1.C', qui s'étendent en longueur selon l'axe X-X et qui sont directement juxtaposées les unes aux autres selon l'axe Y-Y, comme bien visible sur la figure 2. La couche L2.C' présente, quant à elle, une face F.L2.C', qui est tournée, selon l'axe Z-Z, vers le groupe de couches superposées GL.C' et la couche L1.C', en faisant ainsi face, selon l'axe Z-Z, à la face F.L1.C', et qui, pour la couche L2.C', délimite le canal C'. Dans l'exemple de réalisation considéré ici, cette face F.L2.C' est formée par des bandes B.L2.C' de la couche L2.C', qui s'étendent en longueur selon l'axe Y-Y et qui sont juxtaposées directement les unes aux autres selon l'axe X-X, comme bien visible sur la figure 2. Les faces F.L1.C' et F.L2.C' sont ainsi agencées en regard l'une de l'autre selon l'axe Z-Z, en étant écartées l'une de l'autre d'une distance correspondant à la dimension, selon cet axe Z-Z, du canal C'.

Selon l'axe Y-Y, le canal C' considéré ci-dessus est délimité exclusivement par le groupe de couches superposées GL.C', plus précisément par des bords E1.GL.C' et E2.GL.C' du groupe de couches superposées GL.C', chacun de ces bords étant disposé parallèlement à l'axe X-X et transversalement au plan de la couche correspondante. Le bord E1.GL.C' est en regard, suivant l'axe Y-Y, du bord E2.GL.C', en étant écarté d'une distance correspondant à la dimension, selon cet axe Y-Y, du canal C'.

Le bord E1.GL.C' est formé par la tranche latérale de bandes B1.GL.C' du groupe de couches superposées GL.C', qui s'étendent en longueur selon l'axe X-X, sur l'un des deux côtés axiaux, selon l'axe Y-Y, du canal C'. Le bord E2.GL.C' est, quant à lui, formé par la tranche latérale de bandes B2.GL.C' du groupe de couches superposées, qui s'étendent aussi en longueur selon l'axe X-X mais qui sont situés du côté axial, selon l'axe Y-Y, du canal C' opposé au côté axial de ce dernier où sont situées les bandes B1.GL.C'.

Suivant des considérations similaires à celles développées plus haut, chacune des bandes B1.GL.C' et B2.GL.C' est soudée par fusion à la ou aux couches du groupe GL.C', immédiatement superposée(s) à la couche à laquelle appartient la bande ou, à défaut de cette couche, à la couche L1.C' ou à la couche L2.C', ce soudage par fusion de chacune des bandes B1.GL.C' et B2.GL.C' étant réalisé sur des zones de fusion qui s'étendent de manière continue sur toute la longueur du canal C' entre les extrémités de ce dernier opposées l'une à l'autre selon l'axe X-X. Globalement, les diverses zones de fusion entre les couches L1.C' et L2.C' et les bandes B1.GL.C' et B2.GL.C' du groupe de couches superposées GL.C' s'étendent de manière continue sur toute la longueur du canal C' et sont réparties, selon l'axe Y-Y, de part et d'autre du canal C', de manière à étancher le canal C' et à en garantir la résistance à la pression. Une partie de ces zones de fusion est montrée dans la partie droite de la figure 3.

On notera que, comme bien visible sur la figure 3, les bandes B1.GL.C' incluent la bande B2. L2.C du canal C détaillée plus haut, ainsi que les bandes similaires à cette bande B2.L2.C des autres canaux C de l'empilement correspondant. De la même manière, les bandes B2.GL.C' incluent les bandes, similaires à la bande B1.L2.C du canal C détaillée plus haut, des canaux C situés sur le côté axial, selon l'axe Y-Y, du canal C' opposé à celui où sont situés les canaux C montrés à la figure 3. Plus globalement, on comprend que le canal C' est partiellement délimité par les bandes de la deuxième couche associée à chacun des canaux C, qui forment les bords délimitant ce canal C au niveau de cette deuxième couche. Il en résulte que, comme bien visible sur la figure 3, chacun des canaux C est séparé, selon l'axe Y-Y, du canal C' par uniquement une des bandes de la deuxième couche associée à chacun des canaux C, ce qui limite l'épaisseur de matière séparant les canaux C et C' afin de faciliter les échanges thermiques entre les deux fluides circulant respectivement dans les canaux C et C'.

Comme précédemment pour les canaux C, les considérations qui précèdent concernant la délimitation du canal C' considéré ci-dessus s'appliquent à chacun des autres canaux C' du corps 101, du fait de l'empilement des couches L de ce corps suivant l'axe Z-Z.

La structure du corps 101 de l'échangeur récupérateur 100, qui a été détaillée jusqu'ici, permet de dimensionner les canaux C en tant que microcanaux. En particulier, la deuxième couche associée à chacun des canaux C peut avantageusement être prévue pour présenter une épaisseur, c'est-à-dire une dimension selon l'axe Z-Z, qui est égale ou inférieure à 0,1 mm et les bandes de cette deuxième couche, formant les bords latéraux du canal C considéré, peuvent avantageusement être écartées, selon l'axe Y-Y, de 1 mm voire de moins d'1 mm : la section transversale de chacun des canaux C présente alors une aire égale ou inférieure à 0,1 mm². Dans le même temps, les canaux C s'étendent en longueur suivant l'axe X-X sur une dimension pouvant valoir plusieurs millimètres, voire plusieurs centimètres. Il en résulte que, pour les canaux C, le rapport entre leur surface d'échange et leur volume d'échange peut être très élevé, typiquement supérieur à 10 000 m²/m³.

De plus, également en lien avec la structure à couches superposées du corps 101, l'état de surface des parois délimitant les canaux C et C' peut être maîtrisé. En particulier, les faces et, le cas échéant, les bords délimitant chacun des canaux C, tels que les faces F.L1.C et F.L3.C et les bords E1.L2.C et E2.L2.C du canal C considéré plus haut, présentent avantageusement une rugosité de surface Ra égale ou inférieure à 0,8 µm, voire égale ou inférieure à 0,3 µm. En pratique, une telle rugosité de surface résulte de l'état de surface des bandes B utilisées pour fabriquer le corps 101 et/ou d'opérations de rectification qui peuvent être mises en œuvre lors de la fabrication du corps 101, comme évoqué par la suite. Bien entendu, cette maîtrise de la rugosité de surface peut avantageusement s'appliquer aux canaux C'. Un tel état de surface pour les faces délimitant les canaux C et/ou C', ainsi que pour, le cas échéant, les bords délimitant ces canaux C et/ou C', permet de diminuer substantiellement les pertes de charge, ainsi que de diminuer l'épaisseur de couche limite pour les fluides circulant dans ces canaux.

En outre, l'intégralité du corps 101 de l'échangeur 100 est constitué du métal dont sont formées les bandes B de ces couches L, étant rappelé que ces dernières sont soudées par fusion les unes aux autres sans métal d'apport : le corps 101 présente ainsi une conductivité thermique identique en tout point de ce corps, qui est égale à celle du métal constituant les bandes B. Ainsi, lorsque les bandes B sont réalisées en alliage CuZn2, le corps 101 présente, en tout point, une conductivité thermique d'environ 300 W/m.°K.

Pour fabriquer l'échangeur 100, on peut mettre en œuvre un procédé de fabrication additive, c'est-à-dire un procédé réalisant le corps 101 de façon itérative couche après couche, en prévoyant, pour chaque couche, de déposer les bandes de la couche puis de souder ces bandes, les opérations de soudure pouvant par exemple être mises en œuvre par application d'un faisceau laser et/ou par résistance. Afin de répondre aux exigences de finition le cas échéant, ce procédé est avantageusement complété par des opérations d'enlèvement de matière, par abrasion, usinage ou ablation laser.

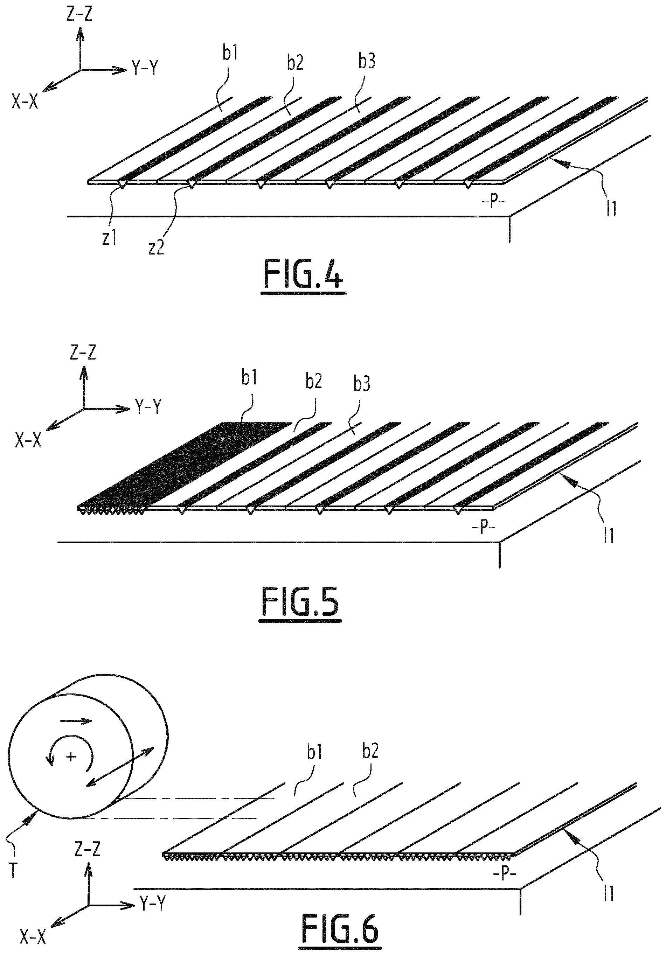

Un exemple d'un tel procédé de fabrication de l'échangeur 100 va maintenant être décrit en regard des figures 4 à 10.

Comme représenté sur la figure 4, une première étape consiste à déposer une première couche I1 de bandes b1, b2, b3, etc..., sur un support métallique plan P, qui est orienté perpendiculairement à l'axe Z-Z et qui, en pratique, est sensiblement horizontal. A titre d'exemple, chacune des bandes b1, b2, etc... est réalisée en CuZn2, s'étend en longueur suivant l'axe X-X sur plusieurs centimètres, en particulier sur une longueur correspondant à la longueur utile et nécessaire de l'échangeur 100, et présente une section transversale de forme rectangulaire de 2 mm sur 0,1 mm environ. Comme montré sur la figure 4, les bandes b1, b2, etc... sont juxtaposées directement les unes contre les autres, selon l'axe Y-Y, en étant maintenues en place sur le support P par tout moyen approprié, notamment par un trait de soudure z1, z2, etc...

Lors d'une deuxième étape illustrée à la figure 5, l'ensemble des bandes de la couche I1 est soudé par fusion avec le support P. Les détails de mise en œuvre de cette étape sont donnés dans WO 2017/121746 auquel le lecteur peut se reporter.

Lors d'une troisième étape montrée à la figure 6, la face supérieure de la couche I1 est aplanie par enlèvement de matière, grâce à un outil ad hoc T agissant par abrasion, usinage ou ablation laser. Là encore, des détails de mise en œuvre de cette étape sont donnés dans WO 2017/121746.

Lors d'une étape suivante, une nouvelle couche de bandes, référencée I2, est déposée sur la couche I1 et est soudée par fusion avec cette couche I1, les bandes de la couche I2 s'étendant en longueur selon l'axe Y-Y, autrement dit en étant décalées de 90° par rapport à la direction longitudinale des bandes de la couche I1. Là encore, WO 2017/121746 fournit des explications correspondantes.

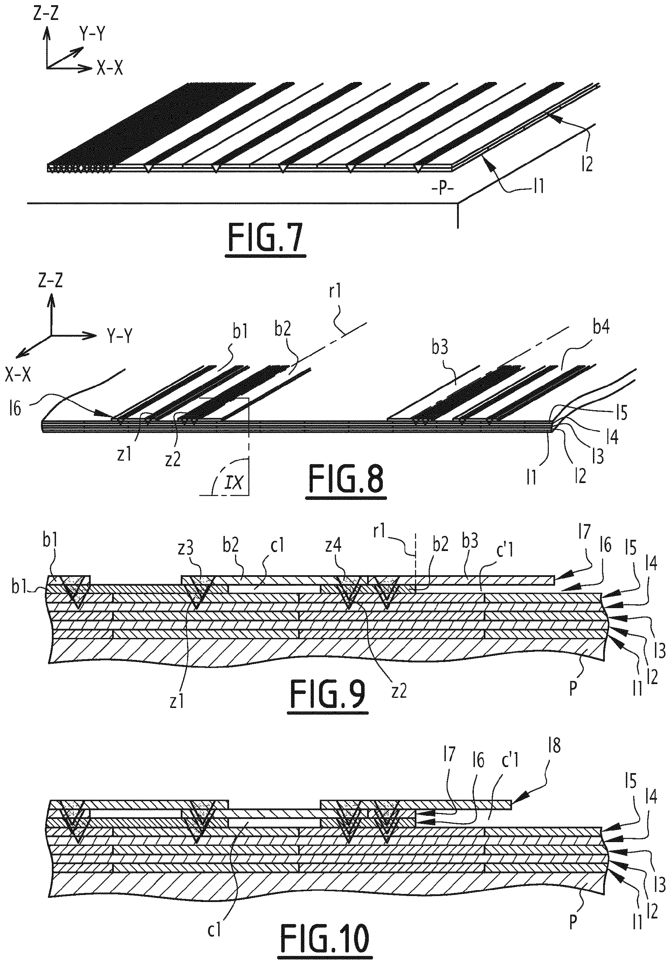

Plusieurs autres couches peuvent être déposées et soudées par fusion, moyennant la répétition des étapes respectivement illustrées par les figures 6 et 7. A titre d'exemple, cinq couches I1 à I5 sont ainsi réalisées les unes après les autres, les cinq couches ainsi superposées étant montrées à la figure 8. Avant de mettre en œuvre l'étape illustrée par cette figure 8, la face supérieure de la couche I5 est aplanie, notamment à l'aide de l'outil T, au cours d'une étape de rectification similaire à celle décrite à la figure 6.

Lors de l'étape illustrée à la figure 8, des bandes b1, b2, b3 et b4 d'une couche I6 nouvellement réalisée sur la couche I5 sont déposées sur la couche I5 et sont soudées par fusion avec cette couche I5. Les bandes b1, b2, b3 et b4 de la couche I6 s'étendent chacune en longueur selon l'axe X-X.

Avant de passer à l'étape montrée à la figure 9, les faces supérieures des bandes b1, b2, b3 et b4 de la couche I6 sont aplanies, là encore à l'aide notamment de l'outil T et, plus généralement, suivant des considérations similaires à celles évoquées plus haut en lien avec la figure 6. Lors de l'étape illustrée à la figure 9, une nouvelle couche, référencée I7, est déposée sur la couche I6. En particulier, comme montré sur la figure 9, des bandes b1, b2 et b3 de la couche I7, qui s'étendent en longueur selon l'axe X-X, sont déposées sur les bandes b1 et b2 de la couche I6.

On comprend, notamment en comparant la figure 9 avec les figure 2 et 3, que les couches I5, I6 et I7 mentionnées ci-dessus correspondent respectivement à des première, deuxième et troisième couches délimitant un premier des canaux C, noté c1 sur la figure 9. En particulier, les bandes b1 et b2 de la couche I6 mentionnées plus haut correspondent respectivement aux bandes B1.L2.C et B2.L2.C pour le canal c1. De même, la bande b2 de la couche I7 correspond à la bande B1.L3.C pour le canal c1. On comprend donc également que, lors de l'étape illustrée à la figure 8, le soudage par fusion entre les bandes b1 et b2 et la couche I5 est réalisé sur deux zones de fusion z1 et z2 qui correspondent respectivement aux zones de fusion Z1.C et Z2.C pour le canal c1. Et, de la même façon, le soudage de la couche I7 sur les bandes b1 et b2 de la couche I6 lors de l'étape illustrée à la figure 9 est réalisé sur des zones de fusion z3 et z4 qui correspondent respectivement aux zones de fusion Z3.C et Z4.C pour le canal c1.

Egalement par comparaison de la figure 9 avec les figures 2 et 3, on comprend que les couches I5, I6 et I7 mentionnées plus haut participent à délimiter un premier des canaux C', noté c'1 sur la figure 9. En particulier, la bande b2 de la couche I6 et la bande b3 de la couche I7 forment des bords du canal c'1 : dans la mesure où les bandes utilisées dans cet exemple de procédé de fabrication présentent toutes la même largeur, il est nécessaire de rectifier la bande b2 de la couche I6 et la bande b3 de la couche 17. Sur la figure 8, la rectification de la bande b2 de la couche I6 est indiquée en traits mixtes, référencés r1. Sur la figure 9, la rectification de la bande b3 de la couche I7 est également indiquée en traits mixtes, référencée r1. En pratique, les modalités de mise en œuvre des opérations de rectification correspondantes ne sont pas limitatives de l'invention, n'importe quel outil de rectification approprié pouvant être utilisé. De même, le moment de mise en œuvre de ces opérations de rectification peut être différent de celui décrit ci-dessus en lien avec les figures 8 et 9.

La figure 10 illustre une étape subséquente, au cours de laquelle une nouvelle couche, référencée I8, est déposée et fusionnée sur la couche I7. On comprend qu'en répétant ainsi les opérations décrites ci-dessus en lien avec les figures 8, 9 et 10, toutes les couches L du corps 101 de l'échangeur 100 peuvent être réalisées, tout en délimitant dans ce corps 101 les canaux C et C', en tenant compte des explications détaillées, données précédemment, quant aux spécifications de délimitation de ces canaux C et C'.

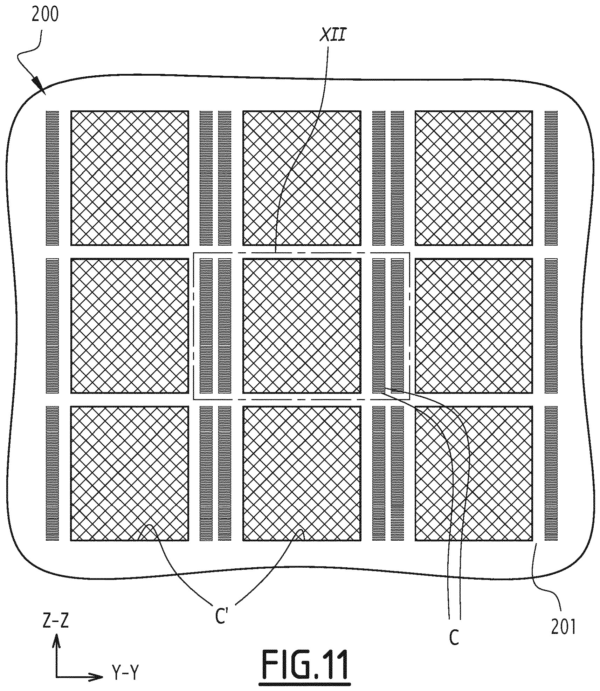

Sur les figures 11 à 13 est représenté un échangeur thermique 200. Cet échangeur 200 est un échangeur régénérateur, qui permet un échange thermique entre un fluide et un corps 201 de l'échangeur en deux temps. Dans un premier temps, le fluide circule eu travers du corps 201 de l'échangeur 200, en y réalisant un échange thermique depuis le fluide vers le corps 201 si bien que de l'énergie thermique est stockée dans le corps 201. A l'extérieur de l'échangeur 200, le fluide subit une transformation, notamment de type température, pression ou changement de phase, puis, dans un second temps, le fluide circule en sens inverse au travers du corps 201 de l'échangeur, en réalisant un échange thermique depuis le corps 201 vers le fluide de manière que ce dernier se voit restituer tout ou partie de l'énergie thermique qui avait été stockée dans le corps 201 au cours du premier temps.

Comme pour le corps 101, le corps 201 est de nature métallique et présente une forme tridimensionnelle qui sera décrite en référence au repère orthogonal d'axes X-X, Y-Y et Z-Z.

Comme pour l'échangeur 100, l'échangeur 200 comporte des canaux C destinés à la circulation du fluide précité. L'échangeur 200 comporte également des canaux C', qui ne sont pas destinés à la circulation d'un fluide mais qui sont destinés à contenir un isolant thermique, dont la nature n'est pas limitative de l'invention et qui n'est indiqué schématiquement que sur la figure 11. Comme pour l'échangeur 100, les canaux C et C' de l'échangeur 200 sont délimités par le corps 201 de cet échangeur, en s'étendant en longueur parallèlement les uns aux autres, suivant l'axe X-X, chacun de ces canaux C et C' reliant l'une à l'autre les extrémités respectives du canal, opposées l'une à l'autre selon l'axe X-X. En service, l'échangeur 200 est associé à une source chaude et une source froide, telles qu'un récupérateur chaud et un récupérateur froid, entre lesquelles le fluide précité circule via les canaux C de l'échangeur 200. En pratique, toutes les extrémités axiales des canaux C, situées sur un côté, selon l'axe X-X, du corps 201 sont reliées, à l'extérieur de l'échangeur 200, à la source froide, tandis que toutes les extrémités axiales opposées des canaux C sont, au niveau de l'autre côté axial, selon l'axe X-X, de l'échangeur 200, reliées, à l'extérieur de l'échangeur 200, à la source chaude. Le fluide peut ainsi circuler de la source froide à la source chaude, via les canaux C, en s'écoulant librement dans ces derniers, et inversement de la source chaude à la source froide.

Dans l'exemple de réalisation considéré sur les figures 11 à 13, l'agencement relatif des canaux C et des canaux C' de l'échangeur 200 est le même que celui des canaux C et C' de l'échangeur 100. On se réfère donc aux précisions données antérieurement à cet égard, en particulier les explications relatives au motif associant un des canaux C' et plusieurs des canaux C. Par ailleurs, à titre d'exemple non limitatif, qui est approprié au motif associant cent-dix canaux C et un canal C', montré sur les figures 11 à 13, le fluide précité est de l'hélium gazeux, circulant dans les canaux C à une pression moyenne de 25 bars environ, avec une température de l'ordre de 600°K à la source chaude et une température de l'ordre de 300°K à la source froide. L'isolant thermique reçu dans les canaux C' peut alors être, par exemple, de la poudre céramique.

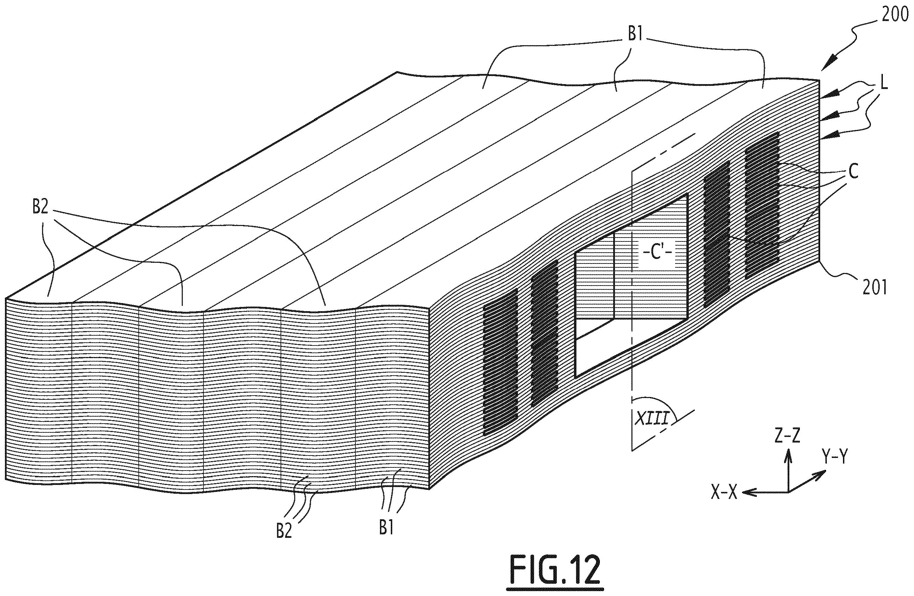

En revenant maintenant à la description du corps 201 de l'échangeur 200, la figure 12 montre que ce corps 201 est, exactement comme le corps 101 de l'échangeur 100, constitué d'une pluralité de couches L, planes et superposées suivant l'axe Z-Z. De manière similaire au corps 101, chaque couche L du corps 201 est constituée de bandes métalliques, chacune de ces bandes de chaque couche L étant prévue pour occuper toute l'épaisseur, selon l'axe Z-Z, de la couche correspondante. En revanche, à la différence des bandes métalliques B de l'échangeur 100, les bandes de chaque couche L de l'échangeur 200 s'étendent toutes en longueur suivant l'axe Y-Y, en étant directement juxtaposées les unes aux autres selon l'axe X-X, comme bien visible sur la figure 12. De plus, les bandes de chaque couche L de l'échangeur 200 ne sont pas toutes constituées du même métal, mais, au contraire, sont réparties en deux catégories de bandes qui se distinguent l'une de l'autre par le métal les constituant : ainsi, chaque couche L de l'échangeur 200 comporte, à la fois, des bandes B1 constituées d'un premier métal et des bandes B2 constituées d'un second métal, les premier et second métaux se distinguant l'un de l'autre par le fait que le premier métal a une conductivité thermique différente de celle du second métal. Au niveau de chacune des couches L, les bandes B1 et les bandes B2 sont directement juxtaposées les unes aux autres selon l'axe X-X, en alternant : en d'autres termes, suivant l'axe X-X, une des bandes B1 succède à l'une des bandes B2, qui elle-même succède à l'une des bandes B1, et ainsi de suite, comme bien visible sur la figure 12. De plus, les bandes B1 des différentes couches L sont superposées les unes avec les autres selon l'axe Z-Z et les bandes B2 de ces couches sont également superposées les unes aux autres selon l'axe Z-Z : en d'autres termes, suivant l'axe Z-Z, une des bandes B1 d'une des couches L est surplombée par une des bandes B1 de la couche suivante, et ainsi de suite ; il en est de même pour les bandes B2.

A titre d'exemple non limitatif, les bandes B1 sont constituées de cuivre ou d'un alliage à base de cuivre, tel que CuZn2, et les bandes B2 sont constituées de titane ou d'un alliage à base de titane, tel que TA6V. La conductivité thermique des bandes B2 est ainsi environ cinquante fois moindre que celle des bandes B1. Dans cet exemple, les bandes B1 peuvent être qualifiées de bandes conductrices, tandis que les bandes B2 peuvent être qualifiées de bandes isolantes. Quels que soient les deux métaux différents, retenus pour constituer respectivement les bandes B1 et les bandes B2, on comprend que le corps 201 présente, du fait de l'agencement de ces bandes au sein des couches superposées L, une conductivité thermique anisotrope pour le corps 201. En particulier, on peut définir, pour le corps 201, deux conductivités thermiques distinctes, à savoir une conductivité thermique longitudinale, qui correspond à la conductivité thermique parallèle à la direction de l'alternance des bandes B1 et B2 au niveau des couches L, autrement dit parallèle à l'axe X-X, et une conductivité thermique transversale, qui correspond à la conductivité thermique perpendiculaire à la direction de l'alternance des bandes B1 et B2 dans les couches L, autrement dit parallèle à l'axe Y-Y.

De manière similaire au corps 101, les couches L du corps 201 sont agencées de manière à définir à la fois les canaux C et les canaux C'.

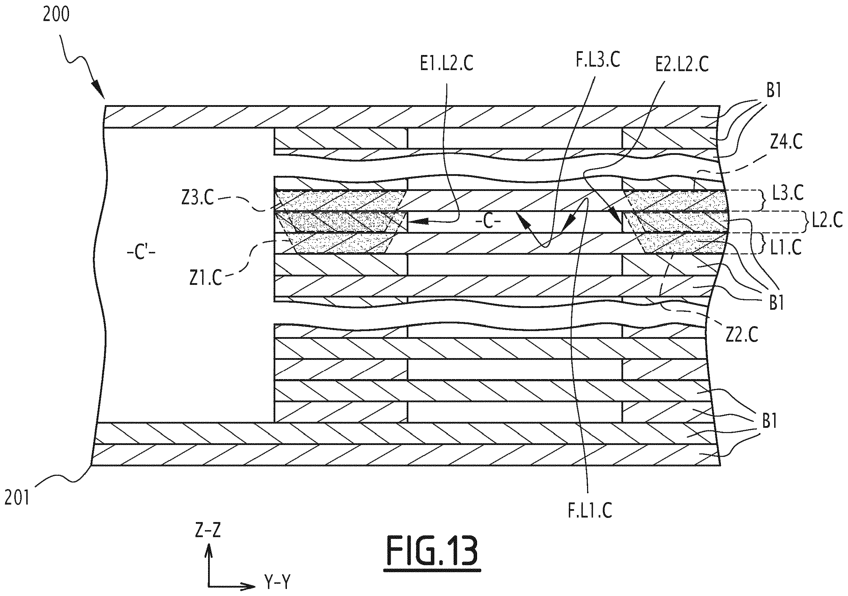

Pour les canaux C, on renvoie à la description détaillée donnée précédemment pour l'échangeur 101, en particulier en lien avec les figures 2 et 3. Ainsi, en réutilisant les mêmes références, les figures 12 et 13 illustrent le fait que chaque canal C de l'échangeur 200 est défini en totalité par trois couches, directement superposées les unes aux autres, parmi les couches L du corps 201, chaque canal C étant ainsi délimité exclusivement par :
- une face F.L1.C d'une première couche L1.C et une face F.L3.C d'une troisième couche L3.C séparée de la première couche L1.C par une deuxième couche L2.C, et
- des bords E1.L2.C et E2.L2.C de la couche L2.C.

Les caractéristiques géométriques relatives aux faces F.L1.C et F.L3.C et aux bords E1.L2.C et E2.L2.C pour les canaux C de l'échangeur 200 sont les mêmes que celles, données plus haut, pour les canaux C de l'échangeur 100. En revanche, la constitution de ces faces et de ces bords diffère pour l'échangeur 200, du fait que toutes les bandes B1 et B2 de chaque couche L de l'échangeur 200 s'étendent en longueur suivant l'axe Y-Y. Plus précisément, on comprend que chacune des faces F.L1.C et F.L3.C de chaque canal C de l'échangeur 200 est formée par la succession, suivant l'axe X-X, de portions longitudinales des bandes B1 et B2 de la couche correspondante L1.C, L3.C. De plus, pour chaque canal C, chacune des première bande B1 et des deuxième bande B2 de la couche L2.C associée au canal est localement interrompue, suivant sa longueur, de manière à former les bords E1.L2.C et E2.L2.C délimitant le canal C, comme bien visible sur la figure 13.

Suivant des considérations similaires à celles évoquées plus haut visant à étancher chaque canal C et à en garantir la résistance à la pression, les bandes B1 et B2 de la couche L2.C de chaque canal C sont soudées par fusion à la couche L1.C correspondante et à la couche L3.C correspondante sur des zones de fusion Z1.C, Z2.C, Z3.C et Z4.C similaires aux zones de fusion ayant les mêmes références, décrites plus haut pour l'échangeur 100. Suivant une disposition optionnelle avantageuse, qui est spécifique à l'échangeur 200, chacune des bandes B1 de la couche L2.C associée à chaque canal C est totalement soudée par fusion avec les premières bandes respectives B1 des couches associées L1.C et L3.C, superposées selon l'axe Z-Z avec la bande B1 considérée de la couche L2.C, comme bien visible sur la figure 13 pour l'un des canaux C, étant entendu qu'il en est alors de même pour chacune des bandes B2 de la couche L2.C de chaque canal C : de cette façon, la continuité métallurgique entre les bandes B1 et la continuité métallurgique entre les bandes B2, suivant l'axe Z-Z, est améliorée.

Pour ce qui concerne chaque canal C' de l'échangeur 200, on renvoie également aux explications données plus haut quant à la délimitation des canaux C' de l'échangeur 100. En particulier, on comprend, notamment au vu de la figure 13, que chacun des canaux C' de l'échangeur 200 est délimité par les bandes B1 et B2 de toutes les couches superposées délimitant les canaux C.

Grâce à l'alternance des bandes B1 et B2 dans chacune des couches L du corps 201 de l'échangeur 200, alors que les canaux s'étendent en longueur suivant la direction de cette alternance, la conductivité thermique longitudinale de l'échangeur 200 est limitée tandis que, dans le même temps, la conductivité thermique transversale de cet échangeur est augmentée. De cette façon, les fuites thermiques au travers de l'échangeur 200 entre les sources chaude et froide sont substantiellement amoindries tandis que, dans le même temps, l'effusivité et la diffusivité de l'échangeur sont élevées. Ces avantages, appréciables pour un échangeur de type régénérateur comme l'échangeur 200, sont associés aux caractéristiques géométriques intéressantes des canaux C, détaillées plus haut pour l'échangeur 100, en particulier le rapport surface d'échange/volume d'échange qui est élevé.

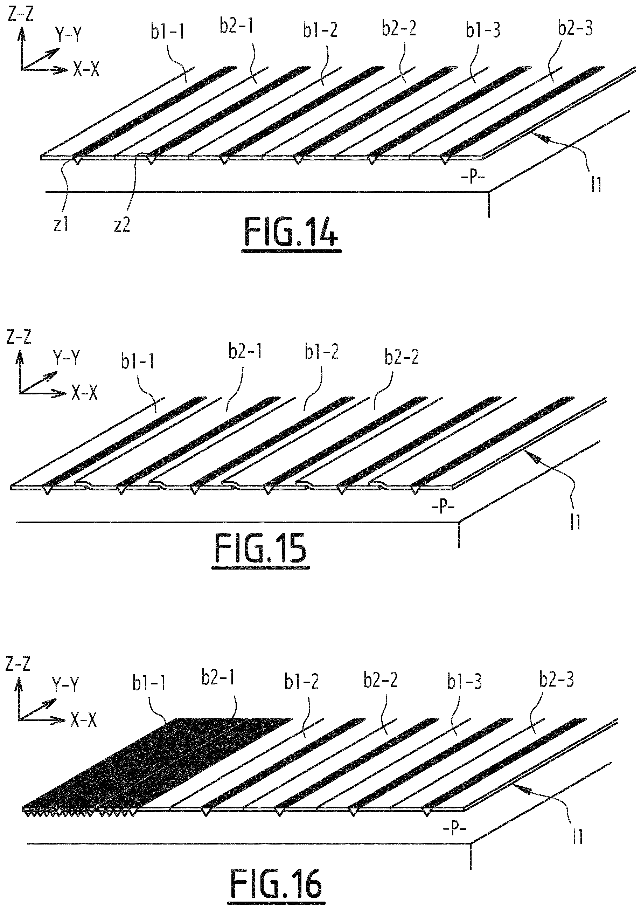

Pour fabriquer l'échangeur 200, on peut mettre en œuvre un procédé de fabrication additive, exactement comme pour l'échangeur 100. Un exemple d'un tel procédé de fabrication de l'échangeur 200 va maintenant être décrit en regard des figures 14 à 20.

Comme représenté sur la figure 14, une première étape du procédé consiste à déposer une première couche I1 où alternent des bandes b1-1, b1-2, etc..., constituées du premier métal précité, avec des bandes b2-1, b2-2, etc... constituées du second métal précité. La couche I1 est déposée sur un support métallique plan P, qui est orienté perpendiculairement à l'axe Z-Z et qui, en pratique, est sensiblement horizontal. Chacune des bandes s'étend en longueur suivant l'axe Y-Y et présente une section transversale de forme rectangulaire de 2 mm sur 0,1 mm environ. Comme montré sur la figure 14, les bandes b1-1, b2-1, b1-2, b2-2, b1-3, etc... sont juxtaposées directement les unes contre les autres, selon l'axe X-X, en étant maintenues en place sur le support P par tout moyen approprié, notamment par une soudure z1, z2, etc... sans métal d'apport.

La figure 15 illustre une variante de mise en œuvre pour cette première étape. Selon cette variante, plutôt que les chants latéraux des bandes de la couche I1 soient juxtaposés directement les uns contre les autres selon l'axe X-X comme sur la figure 14, une frange latérale de chacune de ces bandes est disposée en recouvrement, selon l'axe Z-Z, avec la bande adjacente, s'étendant le long de cette frange. Ce recouvrement marginal entre les bandes vise à améliorer la continuité métallurgique entre les métaux respectifs des bandes constituées du premier métal et des bandes constituées du second métal.

Lors d'une deuxième étape illustrée à la figure 16, l'ensemble des bandes de la couche I1 est soudé par fusion avec le support P. Les détails de mise en œuvre de cette étape sont donnés dans WO 2017/121746 auquel le lecteur peut se reporter.

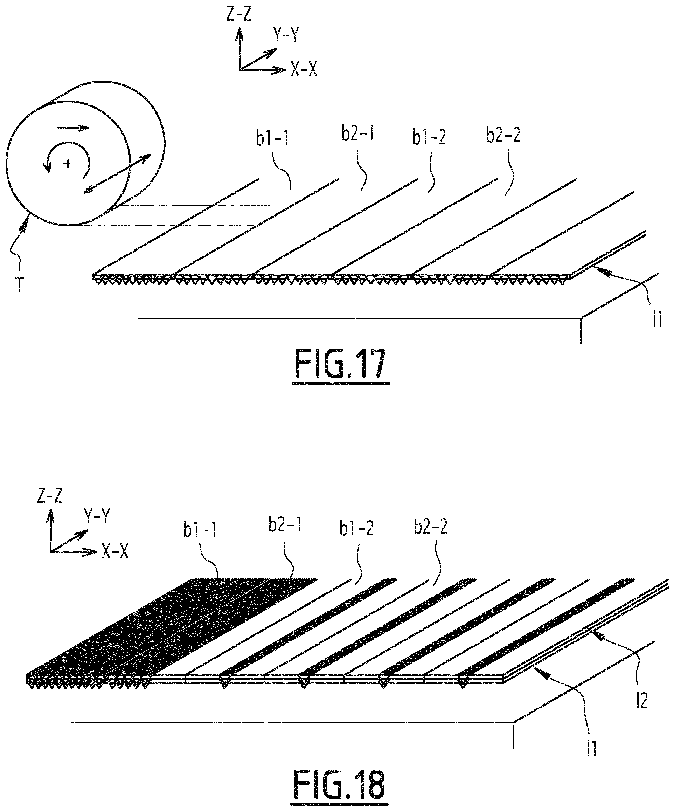

Lors d'une troisième étape montrée à la figure 17, la face supérieure de la couche I1 est aplanie par enlèvement de matière, grâce à un outil ad hoc T agissant par abrasion, usinage ou ablation laser. Là encore, des détails de mise en œuvre de cette étape sont donnés dans WO 2017/121746.

Lors d'une étape suivante, illustrée à la figure 18, une nouvelle couche I2 de bandes b1-1, b2-1, b1-2, b2-2, etc... est déposée sur la couche I1 de manière que ces bandes s'étendent en longueur selon l'axe Y-Y et que les bandes b1-1, b1-2, etc... de la couche I2, constituées du premier métal, soient déposées et soudées par fusion avec les bandes b1-1, b1-2, etc... de la couche 11, tandis que les bandes b2-1, b2-2, etc... de la couche I2, constituées du second métal, sont déposées et soudées par fusion avec les bandes b2-1, b2-2, etc... de la couche I1. Ces opérations de dépôt et soudage par fusion entre les bandes superposées des couches I1 et I2 sont présentées en détail dans WO 2017/121746. Bien entendu, le dépôt de la couche I2 sur la couche I1 peut être réalisé conformément à la variante montrée à la figure 15.

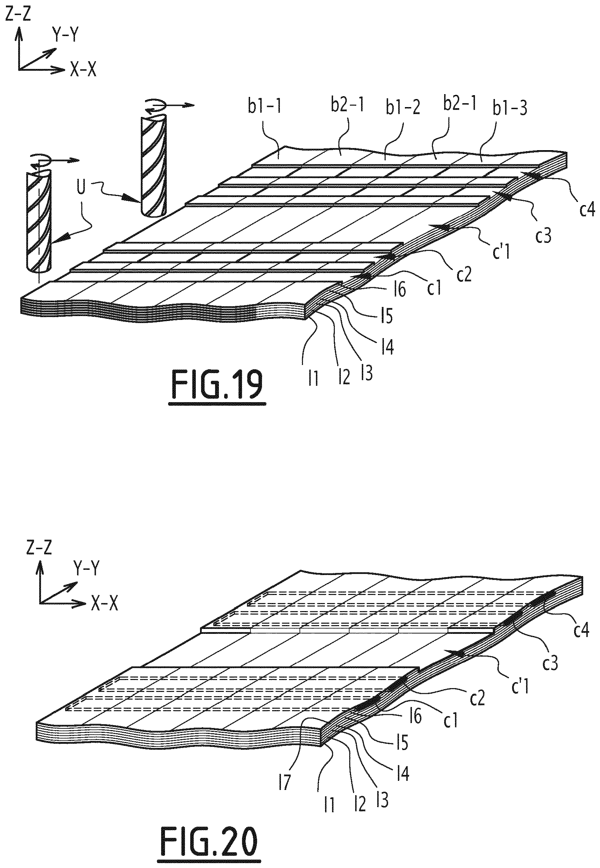

Plusieurs autres couches peuvent être déposées et soudées par fusion, la face supérieure de chaque couche nouvellement déposée étant aplanie par enlèvement de matière avant de déposer la couche suivante, moyennant la répétition des étapes respectivement illustrées par les figures 17 et 18. A titre d'exemple, cinq couches I1 à I5 sont ainsi réalisées les unes après les autres, les cinq couches ainsi superposées étant montrées à la figure 19. Avant de mettre en œuvre l'étape illustrée par la figure 19, la face supérieure de la couche I5 est aplanie par enlèvement de matière, notamment à l'aide de l'outil T, au cours d'une étape de rectification similaire à celle décrite à la figure 17.

Lors de l'étape illustrée à la figure 19, des bandes b1-1, b2-1, b1-2, b2-2, etc... d'une couche I6 nouvellement réalisée sur la couche I5 sont déposées sur la couche I5 et sont soudées par fusion avec cette couche I5, de manière similaire à l'étape illustrée à la figure 18 pour la couche I2. Avant de passer à une étape montrée à la figure 20 consistant à déposer une nouvelle couche I7, la face supérieure des bandes de la couche I6 est aplanie par enlèvement de matière, là encore à l'aide notamment de l'outil T, et, de plus, chacune des bandes b1-1, b2-1, b1-2, b2-2, etc... de la couche I6 est interrompue localement selon sa longueur, et ce en plusieurs niveaux le long des bandes, comme montré à la figure 19. Pour ce faire, un ou plusieurs outils d'usinage U sont appliqués sur la couche I6 de manière à y usiner les interruptions correspondantes des bandes, par enlèvement de matière. Ces interruptions des bandes, chacune réalisées localement suivant leur longueur, sont opérées selon l'axe X-X de façon à délimiter, dans ces bandes, les bords respectifs de canaux c1, c2, c3 et c4, destinés à former certains des canaux C, et les bords respectifs d'un canal c'1 destiné à former un des canaux C'.

Une fois que l'usinage d'au moins les canaux c1, c2, c3 et c4 délimités au niveau de la couche I6 est terminé, la couche I7 est déposée et fusionnée sur la couche I6, ce qui finit de délimiter ces canaux c1, c2, c3 et c4. Cette couche I7 est aussi usinée par enlèvement de matière pour y délimiter les bords du canal c'1, en interrompant chacune des bandes de cette couche I7 localement selon sa longueur au niveau du canal c'1, comme illustré par la figure 20. En pratique, l'usinage des couches en vue de réaliser le canal c'1 peut être opéré à un moment différent de ce qui vient d'être décrit.

Dans tous les cas, on comprend qu'en répétant les opérations décrites ci-dessus en lien avec les figures 19 et 20, toutes les couches L du corps 201 de l'échangeur 200 peuvent être réalisées, tout en délimitant dans ce corps 201 les canaux C et C', en tenant compte des explications détaillées, données précédemment, en ce qui concerne les spécifications de délimitation de ces canaux C et C'.

## Revendications

1. Echangeur thermique (100 ; 200),
comportant des canaux (C) pour la circulation d'un fluide, qui s'étendent en longueur suivant un premier axe (X-X) entre des extrémités opposées respectives des canaux et dans lesquels le fluide est destiné à s'écouler entre lesdites extrémités selon le premier axe, l'échangeur thermique comprenant une pluralité de couches (L) qui sont planes et superposées les unes aux autres selon un deuxième axe (Z-Z) qui est à la fois perpendiculaire aux plans respectifs des couches et perpendiculaire au premier axe (X-X), chacun des canaux (C) étant défini conjointement par des première,
deuxième et troisième couches parmi la pluralité des couches, la deuxième couche (L2.C) associée à chaque canal étant intercalée, selon le deuxième axe (Z-Z), directement entre la première couche (L1.C) et la troisième couche (L3.C) associées à ce canal, de manière que chaque canal est délimité par :
- une face (F.L1.C) de la première couche associée à ce canal, qui est tournée, selon l'axe (Z-Z), vers les deuxième et troisième couches associées à ce canal,
- une face (F.L3.C) de la troisième couche associée à ce canal, qui est tournée, selon le deuxième axe, vers les première et deuxième couches associées à ce canal, et
- des bords (E1.L2.C, E2.L2.C) de la deuxième couche associée à ce canal, qui sont disposés parallèlement au premier axe (X-X) et transversalement au plan de cette deuxième couche, ces bords étant formés par des bandes (B1.L2.C, B2.L2.C ; B1, B2) de cette deuxième couche qui sont soudées par fusion aux première et troisième couches associées à ce canal sur des zones de fusion (Z1.C, Z2.C, Z3.C, Z4.C) qui s'étendent de manière continue sur toute la longueur du canal entre ses extrémités opposées et qui sont situées, selon un troisième axe (Y-Y) perpendiculaire aux premier et deuxième axes, de part et d'autre du canal,
**caractérisé en ce que** chaque couche de la pluralité de couches est constituée de bandes métalliques (B ;B1 , B2) de manière que les bandes d'une même couche s'étendent toutes en longueur suivant une direction perpendiculaire au deuxième axe (Z- Z) et sont adjacentes les unes aux autres, sans nécessairement être jointives, dans le plan de la couche considérée, chacune des bandes de chaque couche de la pluralité de couches occupant toute l'épaisseur, selon le deuxième axe (Z-Z), de la couche correspondante.

2. Echangeur thermique (100 ; 200) suivant la revendication 1, **caractérisé en ce que** la deuxième couche (L2.C) associée à chaque canal (C) présente une épaisseur qui est égale ou inférieure à 0,1 mm, et **en ce que** les bords (E1.L2.C, E2.L2.C) associés à chaque canal sont distants, selon le troisième axe (Y-Y), de 1 mm ou de moins de 1 mm.

3. Echangeur thermique (100 ; 200) suivant l'une des revendications 1 ou 2, **caractérisé en ce que** la face (F.L1.C) de la première couche (L1.C) et la face (F.L3.C) de la troisième couche (L3.C) associées à chaque canal (C) présentent une rugosité de surface Ra inférieure ou égale à 0,8 µm.

4. Echangeur thermique (100 ; 200) suivant la revendication 3, **caractérisée en ce que** les bords (E1.L2.C, E2.L2.C) associés à chaque canal (C) présentent une rugosité de surface Ra inférieure ou égale à 0,8 µm.

5. Echangeur thermique (100 ; 200) suivant l'une des revendications 1 ou 2, **caractérisée en ce que** la face (F.L1.C) de la première couche (L1.C) et la face (F.L3.C) de la troisième couche (L3.C) associées à chaque canal (C), ainsi que les bords (E1.L2.C, E2.L2.C) associés à ce canal présentent une rugosité de surface Ra inférieure ou égale à 0,3 µm.

6. Echangeur thermique (100) suivant l'une quelconque des revendications précédentes,
**caractérisé en ce que** lesdits canaux sont des premiers canaux (C) pour la circulation d'un premier fluide,
**en ce que** pour chaque premier canal (C), les bandes de la deuxième couche (L2.C) associées à ce premier canal, qui forment les bords (E1.L2.C, E2.L2.C) délimitant le premier canal au niveau de cette deuxième couche, sont une première bande (B1.L2.C) et une seconde bande (B2.L2.C) qui s'étendent en longueur selon le premier axe (X-X) et respectivement de part et d'autre, selon le troisième axe (Y-Y), du premier canal, et
**en ce que** l'échangeur thermique (100) comporte au moins un second canal (C') pour la circulation d'un second fluide :
- qui s'étend en longueur suivant le premier axe (X-X) entre des extrémités opposées respectives du second canal,
- dans lequel le second fluide est destiné à s'écouler entre les extrémités du second canal selon le premier axe, et
- qui est agencé à un même niveau, selon le deuxième axe (Z-Z), qu'au moins certains des premiers canaux (C), en étant partiellement délimité par la première ou la seconde bande (B1.L2.C, B2.L2.C) des deuxièmes couches (L2.C) associées auxdits au moins certains des premiers canaux.

7. Echangeur thermique (100) suivant la revendication 6, **caractérisé en ce que**, pour chaque premier canal (C), la face (F.L1.C) de la première couche (L1.C) associée à ce premier canal est formée par une bande (B1.L1.C) de cette première couche, qui s'étend en longueur selon le premier axe (X-X) et qui, selon le troisième axe (Y-Y), déborde de part et d'autre de ce premier canal de manière à être à la fois superposée avec et soudée sur les zones de fusion correspondantes (Z1.C, Z2.C) avec les première et seconde bandes (B1.L2.C, B2.L2.C) de la deuxième couche (L2.C) associée à ce premier canal, et
**en ce que**, pour chaque premier canal, la face (F.L3.C) de la troisième couche (L3.C) associée à ce premier canal est formée par une bande (B1.L3.C) de cette troisième couche, qui s'étend en longueur selon le premier axe (X-X) et qui, selon le troisième axe (Y-Y), déborde de part et d'autre du premier canal de manière à être à la fois superposée avec et soudée sur les zones de fusion correspondantes (Z3.C, Z4.C) avec les première et seconde bandes de la deuxième couche associée à ce premier canal.

8. Echangeur thermique (100) suivant l'une des revendications 6 ou 7, **caractérisé en ce que** le ou chaque second canal (C') est défini conjointement par des première et seconde couches et un groupe de couches superposées parmi la pluralité des couches (L), le groupe de couches superposées (GL.C') associé à ce second canal étant intercalé, selon le deuxième axe (Z-Z), directement entre la première couche (L1.C') et la deuxième couche (L2.C') associées à ce second canal, de manière que le ou chaque second canal est délimité par :
- une face (FL1.C') de la première couche associée à ce second canal, qui est tournée, selon le deuxième axe, vers la troisième couche et le groupe de couches superposées (GL.C') associés à ce second canal,
- une face (FL2.C') de la deuxième couche associée à ce second canal, qui est tournée, selon le deuxième axe, vers la première couche et le groupe de couches superposées associés à ce second canal, et
- des bords (E1.GL.C', E2.GL.C') du groupe de couches superposées (GL.C') associé à ce second canal, qui sont chacun disposés parallèlement au premier axe (X-X) et transversalement aux plans respectifs des couches de ce groupe de couches superposées, ces bords étant formés par des bandes des couches du groupe de couches superposées, qui :
- s'étendent en longueur selon un premier axe (X-X),
- sont, au niveau de chacune des couches du groupe de couches superposées, soudées par fusion à la ou aux couches dudit groupe, qui sont immédiatement superposée(s) à la couche considérée, ou, à défaut, à la première couche ou à la deuxième couche, sur des zones de fusion qui s'étendent de manière continue sur toute la longueur du second canal entre les extrémités opposées de ce second canal et qui sont situées, selon le troisième axe (Y-Y), de part et d'autre de ce second canal, et
- qui incluent les première et/ou seconde bandes (B1.L2.C, B2.L2.C) de la deuxième couche (L2.C) de chacun desdits au moins certains premiers canaux (C).

9. Procédé de fabrication d'un échangeur thermique (100) conforme à l'une quelconque des revendications 6 à 8,
dans lequel les couches (L) de la pluralité des couches de l'échangeur thermique (100) sont réalisées les unes après les autres de façon que chaque couche de la pluralité de couches, qui est nouvellement réalisée, est superposée, selon le deuxième axe (Z-Z), à une couche de la pluralité de couches, précédemment réalisée ou, à défaut de cette couche précédemment réalisée, un support métallique plan (P) qui est perpendiculaire au deuxième axe,
dans lequel, pour réaliser chaque premier canal, il est prévu successivement que :
i) après avoir déposé la première couche (L1.C) associée à ce premier canal, cette première couche est aplanie sur sa face tournée, selon le deuxième axe (Z-Z), à l'opposé d'une couche précédemment réalisée ou, à défaut de cette dernière, à l'opposé du support (P),
ii) les première et seconde bandes (B1.L2.C, B2.L2.C) de la deuxième couche (L2.C) associée à ce premier canal sont déposées sur cette première couche, en s'étendant en longueur selon le premier axe (X-X) et respectivement de part et d'autre, selon le troisième axe (Y-Y), du premier canal à réaliser, et sont soudées par fusion avec cette première couche sur les zones de fusion (Z1.C, Z2.C) pour ces première et deuxième couches,
iii) cette deuxième couche est aplanie sur sa face tournée, selon le deuxième axe (Z-Z), à l'opposé de la première couche, et
iv) la troisième couche associée à ce premier canal est déposée sur les première et seconde bandes de la deuxième couche et soudée par fusion avec ces bandes sur les zones de fusion (Z3.C, Z4.C) pour les deuxième et troisième couches,
et dans lequel au moins certains des premiers canaux sont réalisés les uns après les autres, en utilisant la troisième couche d'un premier canal précédemment réalisé en tant que première couche d'un premier canal à réaliser et en répétant les étapes i), ii), iii) et iv).

10. Echangeur thermique (200) suivant l'une quelconque des revendications 1 à 5, **caractérisé en ce que**, pour chaque canal, les bandes de la première couche associée à ce canal, les bandes de la deuxième couche associée à ce canal et les bandes de la troisième couche associée à ce canal s'étendent en longueur selon le troisième axe (Y-Y) et sont réparties en des premières bandes (B1) constituées d'un premier métal et des secondes bandes (B2) constituées d'un second métal, le premier métal ayant une conductivité thermique différente de celle du second métal, ces première et seconde bandes étant, au niveau de chacune des première, deuxième et troisième couches associées au canal, disposées en alternance selon le premier axe (X-X) de manière que les premières bandes (B1) des première, deuxième et troisième couches associées au canal soient superposées selon le deuxième axe (Z-Z) et que les secondes bandes (B2) des première, deuxième et troisième couches associées au canal soient superposées selon le deuxième axe,
et **en ce que** pour chaque canal, chacune des premières et secondes bandes (B1, B2) de la deuxième couche (L2.C) associée à ce canal est localement interrompue, suivant sa longueur, de manière à former les bords (E1.L2.C, E2.L2.C) délimitant ce canal.

11. Echangeur thermique (200) suivant la revendication 10, **caractérisé en ce que**, pour chaque canal (C) :
- chacune des premières bandes (B1) de la deuxième couche (L2.C) associée à ce canal est totalement soudée par fusion à la fois avec la première bande de la première couche associée au canal, avec laquelle cette première bande de la deuxième couche est superposée, et avec la première bande de la troisième couche (L3.C), avec laquelle cette première bande de la deuxième couche est superposée, en formant les zones de fusion (Z1.C, Z2.C) pour les première et deuxième couches, et
- chacune des secondes bandes (B2) de la deuxième couche associée à ce canal est totalement soudée par fusion à la fois avec la seconde bande de la première couche associée à ce canal, avec laquelle cette seconde bande de la deuxième couche est superposée, et avec la seconde bande de la troisième couche associée à ce canal, avec laquelle cette seconde bande de la deuxième couche est superposée, en formant les zones de fusion (Z3.C, Z4.C) pour les deuxième et troisième couches.

12. Echangeur thermique (200) suivant l'une des revendications 10 ou 11,
**caractérisé en ce que** lesdits canaux sont des premiers canaux (C) pour la circulation du fluide,
et **en ce que** l'échangeur thermique (200) comporte en outre au moins un second canal (C') d'isolation thermique :
- qui s'étend en longueur suivant le premier axe (X-X) entre des extrémités opposées respectives de ce second canal,
- dans lequel est reçu un isolant thermique, et
- qui est agencé à un même niveau, selon le deuxième axe (Z-Z), qu'au moins certains des premiers canaux (C), en étant délimité par les premières et secondes bandes (B1, B2) des première, deuxième et troisième couches desdits au moins certains premiers canaux.

13. Procédé de fabrication d'un échangeur thermique (200) conforme à l'une quelconque des revendications 10 à 12,
dans lequel les couches de la pluralité de couches de l'échangeur thermique (200) sont réalisées les unes après les autres de façon que chaque couche de la pluralité de couches, qui est nouvellement réalisée, est superposée, selon le deuxième axe (Z-Z), à une couche de la pluralité de couches, qui est précédemment réalisée ou, à défaut de cette couche précédemment réalisée, un support métallique plan (P) qui est perpendiculaire au deuxième axe,
dans lequel, pour réaliser chaque canal, il est prévu successivement que :
i) après avoir déposé les premières et secondes bandes (B1, B2) de la première couche (L1.C) associée à ce canal, cette première couche est aplanie sur sa face tournée, selon le deuxième axe (Z-Z), à l'opposé de la couche précédemment réalisée, ou à défaut de cette dernière, à l'opposé du support (P),
ii) les premières bandes (B1) de la deuxième couche (L2.C) associée à ce canal sont déposées sur et sont soudées par fusion avec les premières bandes de cette première couche et les secondes bandes (B2) de cette deuxième couche sont déposées sur et sont soudées par fusion avec les secondes bandes de cette première couche, en formant les zones de fusion (Z1.C, Z2.C) pour les première et deuxième couches,
iii) cette deuxième couche est aplanie sur sa face tournée, selon le deuxième axe, à l'opposé de cette première couche, et le canal à réaliser est usiné par enlèvement de matière dans cette deuxième couche en interrompant chacune des premières et deuxièmes bandes (B1, B2) de cette deuxième couche localement selon sa longueur, et
iv) les premières bandes (B1) de la troisième couche associée à ce canal sont déposées sur et sont soudées par fusion avec les premières bandes de cette deuxième couche et les secondes bandes (B2) de cette troisième couche sont déposées sur et sont soudées par fusion avec les secondes bandes de cette troisième couche, en formant les zones de fusion (Z3.C, Z4.C) pour ces deuxième et troisième couches,
et dans lequel au moins certains des canaux (C) sont réalisés les uns après les autres, en utilisant la troisième couche d'un canal précédemment réalisé en tant que première couche d'un canal à réaliser et en répétant les étapes i), ii), iii) et iv).

14. Procédé suivant la revendication 13, dans lequel lors des étapes ii), et iv), les premières bandes (B1) et les deuxièmes bandes (B2) sont déposées de manière qu'une frange latérale de chaque bande soit en recouvrement, selon le deuxième axe (Z-Z), avec la bande qui s'étend le long de cette frange.

## Patentansprüche

1. Wärmetauscher (100; 200),
umfassend Kanäle (C) für die Zirkulation eines Fluids, die sich in Längsrichtung entlang einer ersten Achse (X-X) zwischen jeweiligen gegenüberliegenden Enden der Kanäle erstrecken und in denen das Fluid zwischen den Enden entlang der ersten Achse strömen soll, der Wärmetauscher umfassend eine Vielzahl von Schichten (L), die eben sind und sich entlang einer zweiten Achse (Z-Z), die sowohl senkrecht zu den jeweiligen Ebenen der Schichten als auch senkrecht zu der ersten Achse (X-X) ist, einander überlagern,
wobei jeder der Kanäle (C) gemeinsam durch eine erste, eine zweite und eine dritte Schicht aus der Vielzahl der Schichten definiert ist, wobei die zweite Schicht (L2.C), die mit jedem Kanal assoziiert ist, entlang der zweiten Achse (Z-Z) direkt zwischen der ersten Schicht (L1.C) und der dritten Schicht (L3.C), die mit diesem Kanal assoziiert sind, eingefügt ist, sodass jeder Kanal durch Folgendes begrenzt ist:
- eine Seite (F.L1.C) der ersten Schicht, die mit diesem Kanal assoziiert ist, die entlang der Achse (Z-Z) der zweiten und der dritten Schicht zugewandt ist, die mit diesem Kanal assoziiert sind,
- eine Seite (F.L3.C) der dritten Schicht, die mit diesem Kanal assoziiert ist, die entlang der zweiten Achse der ersten und der zweiten Schicht zugewandt ist, die mit diesem Kanal assoziiert sind, und
- Ränder (E1.L2.C, E2.L2.C) der mit diesem Kanal assoziierten zweiten Schicht, die parallel zu der ersten Achse (X-X) und quer zu der Ebene dieser zweiten Schicht angeordnet sind, wobei diese Ränder durch Streifen (B1.L2.C, B2.L2.C; B1, B2) dieser zweiten Schicht gebildet werden, die durch Schmelzschweißen mit der diesem Kanal assoziierten ersten und dritten Schicht an Schmelzbereichen (Z1.C, Z2.C, Z3.C, Z4.C), die sich kontinuierlich über die gesamte Länge des Kanals zwischen seinen gegenüberliegenden Enden erstrecken und die entlang einer dritten Achse (Y-Y) senkrecht zu der ersten und der zweiten Achse auf beiden Seiten des Kanals sind, **dadurch gekennzeichnet, dass** jede Schicht der Vielzahl von Schichten aus Metallstreifen (B; B1, B2) bestehen, sodass sich die Streifen derselben Schicht alle in Längsrichtung in einer Richtung senkrecht zu der zweiten Achse (Z-Z) erstrecken und in der Ebene der betreffenden Schicht aneinander angrenzen, ohne notwendigerweise aneinander zu stoßen, wobei jeder der Streifen von jeder Schicht der Vielzahl von Schichten die gesamte Stärke entlang der zweiten Achse (Z-Z) der entsprechenden Schicht einnimmt.

2. Wärmetauscher (100; 200) nach Anspruch 1, **dadurch gekennzeichnet, dass** die mit jedem Kanal (C) assoziierte zweite Schicht (L2.C) eine Stärke aufweist, die gleich wie oder kleiner als 0,1 mm ist, und dass die mit jedem Kanal assoziierten Ränder (E1.L2.C, E2.L2.C) entlang der dritten Achse (Y-Y) um 1 mm oder weniger als 1 mm voneinander beabstandet sind.

3. Wärmetauscher (100; 200) nach einem der Ansprüche 1 oder 2, **dadurch gekennzeichnet, dass** die Fläche (F.L1.C) der ersten Schicht (L1.C) und die Fläche (F.L3.C) der dritten Schicht (L3.C), die mit jedem Kanal (C) assoziiert ist, eine Oberflächenrauigkeit Ra von kleiner als oder gleich wie 0,8 µm aufweisen.

4. Wärmetauscher (100; 200) nach Anspruch 3, **dadurch gekennzeichnet, dass** die mit jedem Kanal (C) assoziierten Ränder (E1.L2.C, E2.L2.C) eine Oberflächenrauigkeit Ra von kleiner als oder gleich wie 0,8 µm aufweisen.

5. Wärmetauscher (100; 200) nach einem der Ansprüche 1 oder 2, **dadurch gekennzeichnet, dass** die Fläche (F.L1.C) der ersten Schicht (L1.C) und die Fläche (F.L3.C) der dritten Schicht (L3.C), die mit jedem Kanal (C) assoziiert sind, sowie die mit diesem Kanal assoziierten Ränder (E1.L2.C, E2.L2.C) eine Oberflächenrauigkeit Ra von kleiner als oder gleich wie 0,3 µm aufweisen.

6. Wärmetauscher (100) nach einem der vorhergehenden Ansprüche, **dadurch gekennzeichnet, dass** die Kanäle erste Kanäle (C) für die Zirkulation eines ersten Fluids sind, dass für jeden ersten Kanal (C) die Streifen der zweiten Schicht (L2.C), die mit diesem ersten Kanal assoziiert sind und die die Ränder (E1.L2.C, E2.L2.C), die den ersten Kanal auf Höhe dieser zweiten Schicht begrenzen, ein erster Streifen (B1.L2.C) und ein zweiter Streifen (B2.L2.C) sind, die sich in Längsrichtung entlang der ersten Achse (X-X) und jeweils auf beiden Seiten entlang der dritten Achse (Y-Y) des ersten Kanals erstrecken, und dass der Wärmetauscher (100) mindestens einen zweiten Kanal (C') für die Zirkulation eines zweiten Fluids umfasst:
- der sich in Längsrichtung entlang der ersten Achse (X-X) zwischen jeweiligen gegenüberliegenden Enden des zweiten Kanals erstreckt,
- wobei das zweite Fluid dazu bestimmt ist, zwischen den Enden des zweiten Kanals entlang der ersten Achse zu strömen, und
- der entlang der zweiten Achse (Z-Z) auf derselben Ebene wie mindestens einige der ersten Kanäle (C) angeordnet ist, wobei er teilweise durch den ersten oder zweiten Streifen (B1.L2.C, B2.L2.C) der zweiten Schichten (L2.C) begrenzt ist, die mit den mindestens einigen der ersten Kanäle assoziiert sind.

7. Wärmetauscher (100) nach Anspruch 6, **dadurch gekennzeichnet, dass** für jeden ersten Kanal (C) die Seite (F.L1.C) der ersten Schicht (L1.C), die mit diesem ersten Kanal assoziiert ist, durch einen Streifen (B1.L1.C) dieser ersten Schicht gebildet, der sich in Längsrichtung entlang der ersten Achse (X-X) erstreckt und der entlang der dritten Achse (Y-Y) auf beiden Seiten dieses ersten Kanals übersteht, sodass er an den entsprechenden Schmelzbereichen (Z1.C, Z2.C) mit dem ersten und dem zweiten Streifen (B1.L2.C, B2.L2.C) der zweiten Schicht (L2.C), die mit diesem ersten Kanal assoziiert ist, sowohl überlagert als auch verschweißt ist, und dass für jeden ersten Kanal die Seite (F.L3.C) der dritten Schicht (L3.C), die mit diesem ersten Kanal assoziiert ist, durch einen Streifen (B1.L3.C) dieser dritten Schicht gebildet ist, der sich in Längsrichtung entlang der ersten Achse (X-X) erstreckt und der entlang der dritten Achse (Y-Y) auf beiden Seiten des ersten Kanals übersteht, sodass er an den entsprechenden Schmelzbereichen (Z3.C, Z4.C) mit dem ersten und dem zweiten Streifen der mit diesem ersten Kanal assoziierten zweiten Schicht sowohl überlagert als auch verschweißt ist.

8. Wärmetauscher (100) nach einem der Ansprüche 6 oder 7, **dadurch gekennzeichnet, dass** der oder jeder zweite Kanal (C') gemeinsam durch erste und zweite Schichten und eine Gruppe von überlagerten Schichten aus der Vielzahl der Schichten (L) definiert ist, wobei die Gruppe von überlagerten Schichten (GL.C'), die mit diesem zweiten Kanal assoziiert ist, entlang der zweiten Achse (Z-Z) direkt zwischen die erste Schicht (L1.C') und die zweite Schicht (L2.C'), die mit diesem zweiten Kanal assoziiert sind, eingefügt ist, sodass der oder jeder zweite Kanal durch Folgendes begrenzt ist:
- eine Seite (FL1.C') der ersten Schicht, die mit diesem zweiten Kanal assoziiert ist, die entlang der zweiten Achse der dritten Schicht und der Gruppe von überlagerten Schichten (GL.C') zugewandt ist, die mit diesem zweiten Kanal assoziiert sind,
- eine Seite (FL2.C') der zweiten Schicht, die mit diesem zweiten Kanal assoziiert ist, die entlang der zweiten Achse der ersten Schicht und der Gruppe von überlagerten Schichten zugewandt ist, die diesem zweiten Kanal assoziiert sind, und
- Ränder (E1.GL.C', E2.GL.C') der mit diesem zweiten Kanal assoziierten Gruppe von überlagerten Schichten (GL.C'), die jeweils parallel zu der ersten Achse (X-X) und quer zu den jeweiligen Ebenen der Schichten dieser Gruppe von überlagerten Schichten angeordnet sind, wobei diese Ränder durch Streifen der Schichten der Gruppe von überlagerten Schichten gebildet sind, die:
- sich in Längsrichtung entlang einer ersten Achse (X-X) erstrecken,
- auf Ebene von jeder der Schichten der Gruppe von überlagerten Schichten mit der Schicht oder den Schichten der Gruppe, die unmittelbar über der betreffenden Schicht ist bzw. sind, oder alternativ mit der ersten Schicht oder der zweiten Schicht in Schmelzbereichen schmelzverschweißt sind, die sich kontinuierlich über die gesamte Länge des zweiten Kanals zwischen den gegenüberliegenden Enden dieses zweiten Kanals erstrecken und die sich entlang der dritten Achse (Y-Y) auf beiden Seiten dieses zweiten Kanals befinden, und
- die den ersten und/oder den zweiten Streifen (B1.L2.C, B2.L2.C) der zweiten Schicht (L2.C) von jedem der mindestens einigen ersten Kanäle (C) beinhalten.

9. Verfahren zur Herstellung eines Wärmetauschers (100) gemäß einem der Ansprüche 6 bis 8, wobei die Schichten (L) der Vielzahl von Schichten des Wärmetauschers (100) nacheinander hergestellt werden, sodass jede Schicht der Vielzahl von Schichten, die neu hergestellt wird, entlang der zweiten Achse (Z-Z) auf eine zuvor hergestellte Schicht der Vielzahl von Schichten oder, in Ermangelung dieser zuvor hergestellten Schicht, auf einen ebenen Metallträger (P), der senkrecht zu der zweiten Achse ist, überlagert wird, wobei zum Herstellen von jedem ersten Kanal nacheinander vorgesehen ist, dass:
i) nach Aufbringen der ersten Schicht (L1.C), die mit diesem ersten Kanal assoziiert ist, diese erste Schicht auf ihrer Seite, die gemäß der zweiten Achse (Z-Z) gegenüber einer zuvor hergestellten Schicht oder, in Ermangelung dieser letzteren, gegenüber dem Träger (P) zugewandt ist, abgeflacht ist,
ii) der erste und der zweite Streifen (B1.L2.C, B2.L2.C) der zweiten Schicht (L2.C), die mit diesem ersten Kanal assoziiert ist, auf dieser ersten Schicht aufgebracht werden, indem sie sich in Längsrichtung entlang der ersten Achse (X-X) und jeweils auf beiden Seiten entlang der dritten Achse (Y-Y) des ersten herzustellenden Kanals erstrecken, und mit dieser ersten Schicht an den Schmelzbereichen (Z1.C, Z2.C) für diese erste und zweite Schicht durch schmelzverschweißt werden,
iii) diese zweite Schicht auf ihrer Seite, die entlang der zweiten Achse (Z-Z) der ersten Schicht abgewandt ist, abgeflacht ist, und
iv) die mit diesem ersten Kanal assoziierte dritte Schicht auf den ersten und zweiten Streifen der zweiten Schicht aufgebracht und mit diesen Streifen an den Schmelzbereichen (Z3.C, Z4.C) für die zweite und dritte Schicht schmelzverschweißt wird, und wobei mindestens einige der ersten Kanäle nacheinander hergestellt werden, indem die dritte Schicht eines zuvor hergestellten ersten Kanals als erste Schicht eines herzustellenden ersten Kanals verwendet wird und die Schritte i), ii), iii) und iv) wiederholt werden.

10. Wärmetauscher (200) nach einem der Ansprüche 1 bis 5, **dadurch gekennzeichnet, dass** sich für jeden Kanal die Streifen der mit diesem Kanal assoziierten ersten Schicht, die Streifen der mit diesem Kanal assoziierten zweiten Schicht und die Streifen der mit diesem Kanal assoziierten dritten Schicht in Längsrichtung entlang der dritten Achse (Y-Y) erstrecken und in erste Streifen (B1) aus einem ersten Metall und zweite Streifen (B2) aus einem zweiten Metall aufgeteilt sind, wobei das erste Metall eine andere Wärmeleitfähigkeit als die des zweiten Metalls aufweist, wobei diese ersten und zweiten Streifen auf Ebene von jeder von der ersten, der zweiten und der dritten Schicht, die mit dem Kanal assoziiert sind, abwechselnd entlang der ersten Achse (X-X) angeordnet sind, sodass die ersten Streifen (B1) der ersten, der zweiten und der dritten Schicht, die mit dem Kanal assoziiert sind, entlang der zweiten Achse (Z-Z) überlagert sind und die zweiten Streifen (B2) der ersten, der zweiten und der dritten Schicht, die mit dem Kanal assoziiert sind, entlang der zweiten Achse überlagert sind, und dass für jeden Kanal jeder von dem ersten und dem zweiten Streifen (B1, B2) der zweiten Schicht (L2.C), die mit diesem Kanal assoziiert ist, je nach seiner Länge lokal unterbrochen ist, um die Ränder (E1.L2.C, E2.L2.C) zu bilden, die diesen Kanal begrenzen.

11. Wärmetauscher (200) nach Anspruch 10, **dadurch gekennzeichnet, dass** für jeden Kanal (C):
- jeder von dem ersten Streifen (B1) der zweiten Schicht (L2.C), die mit diesem Kanal assoziiert ist, sowohl mit dem ersten Streifen der ersten Schicht, die mit dem Kanal assoziiert ist, mit dem dieser erste Streifen der zweiten Schicht überlagert ist, als auch mit dem ersten Streifen der dritten Schicht (L3.C), mit dem dieser erste Streifen der zweiten Schicht überlagert ist, vollständig schmelzverschweißt ist, wodurch die Schmelzbereiche (Z1.C, Z2.C) für die erste und die zweite Schicht gebildet werden, und
- jeder von dem zweiten Streifen (B2) der zweiten Schicht, die mit diesem Kanal assoziiert ist, sowohl mit dem zweiten Streifen der ersten Schicht, die mit diesem Kanal assoziiert ist, mit dem dieser zweite Streifen der zweiten Schicht überlagert ist, als auch mit dem zweiten Streifen der dritten Schicht, die mit diesem Kanal assoziiert ist, mit dem dieser zweite Streifen der zweiten Schicht überlagert ist, vollständig schmelzverschweißt ist, wodurch die Schmelzbereiche (Z3.C, Z4.C) für die zweite und dritte Schicht gebildet werden.

12. Wärmetauscher (200) nach einem der Ansprüche 10 oder 11, **dadurch gekennzeichnet, dass** die Kanäle erste Kanäle (C) für die Zirkulation des Fluids sind, und dass der Wärmetauscher (200) ferner mindestens einen zweiten Kanal (C') zur Wärmeisolierung aufweist:
- der sich in Längsrichtung entlang der ersten Achse (X-X) zwischen jeweiligen gegenüberliegenden Enden dieses zweiten Kanals erstreckt,
- in dem eine Wärmeisolierung aufgenommen ist, und
- der entlang der zweiten Achse (Z-Z) auf derselben Ebene wie mindestens einige der ersten Kanäle (C) angeordnet ist, wobei er durch den ersten und den zweiten Streifen (B1, B2) der ersten, der zweiten und der dritten Schicht, der mindestens einigen ersten Kanäle begrenzt ist.

13. Verfahren zur Herstellung eines Wärmetauschers (200) gemäß einem der Ansprüche 10 bis 12, wobei die Schichten der Vielzahl von Schichten des Wärmetauschers (200) nacheinander hergestellt werden, sodass jede Schicht der Vielzahl von Schichten, die neu hergestellt wird, entlang der zweiten Achse (Z-Z) auf eine zuvor hergestellte Schicht der Vielzahl von Schichten oder, die in Ermangelung dieser zuvor hergestellten Schicht, auf einen ebenen Metallträger (P), der senkrecht zu der zweiten Achse ist, überlagert wird, wobei zum Herstellen von jedem Kanal nacheinander vorgesehen ist, dass:
i) nachdem der erste und der zweite Streifen (B1, B2) der ersten Schicht (L1.C), die mit diesem Kanal assoziiert ist, aufgebracht wurden, diese erste Schicht auf ihrer Seite, die gemäß der zweiten Achse (Z-Z) der zuvor hergestellten Schicht gegenüberliegt, oder in Ermangelung dieser letzteren, dem Träger (P) gegenüberliegt, abgeflacht ist,
ii) die ersten Streifen (B1) der zweiten Schicht (L2.C), die mit diesem Kanal assoziiert ist, auf die ersten Streifen dieser ersten Schicht aufgebracht und mit diesen schmelzverschweißt werden und die zweiten Streifen (B2) dieser zweiten Schicht auf die zweiten Streifen dieser ersten Schicht aufgebracht und mit diesen schmelzverschweißt werden, wodurch die Schmelzbereiche (Z1.C, Z2.C) für die erste und die zweite Schicht gebildet werden,
iii) diese zweite Schicht auf ihrer Seite, die gemäß der zweiten Achse der ersten Schicht gegenüberliegt, abgeflacht ist und der herzustellende Kanal durch Materialentfernung in diese zweite Schicht eingearbeitet wird, indem jeder von dem ersten und dem zweiten Streifen (B1, B2) dieser zweiten Schicht lokal gemäß seiner Länge unterbrochen wird, und
iv) die ersten Streifen (B1) der dritten Schicht, die diesem Kanal assoziiert ist, auf die ersten Streifen dieser zweiten Schicht aufgebracht und mit diesen schmelzgeschweißt werden und die zweiten Streifen (B2) dieser dritten Schicht auf die zweiten Streifen dieser dritten Schicht aufgebracht und mit diesen schmelzgeschweißt werden, wodurch sie Schmelzbereiche (Z3.C, Z4.C) für diese zweite und dritte Schicht bilden, und wobei zumindest einige der Kanäle (C) nacheinander hergestellt werden, indem die dritte Schicht eines zuvor hergestellten Kanals als erste Schicht eines herzustellenden Kanals verwendet wird und die Schritte i), ii), iii) und iv) wiederholt werden.

14. Verfahren nach Anspruch 13, wobei in den Schritten ii), und iv) die ersten Streifen (B1) und die zweiten Streifen (B2) aufgebracht werden, sodass ein Seitenrand von jedem Streifen entlang der zweiten Achse (Z-Z) mit dem Streifen überlappt, der sich entlang dieses Rands erstreckt.

## Claims

1. A heat exchanger (100; 200),
including channels (C) for circulation of a fluid, which extend lengthwise along a first axis (X-X) between respective opposite ends of the channels and in which the fluid is intended to flow between said ends along the first axis, the heat exchanger comprising a plurality of layers (L) that are flat and superimposed on one another along a second axis (Z-Z) that is both perpendicular to respective planes of the layers and perpendicular to the first axis (X-X),
each of the channels (C) being defined jointly by first, second and third layers among the plurality of layers, the second layer (L2.C) associated with each channel being intercalated, along the second axis (Z-Z), directly between the first layer (L1.C) and the third layer (L3.C) that are associated with this channel, such that each channel is delimited by:
- a face (F.L1.C) of the first layer associated with this channel, which faces, along the second axis (Z-Z), toward the second and third layers associated with this channel,
- a face (F.L3.C) of the third layer associated with this channel, which faces, along the second axis, toward the first and second layers associated with this channel, and
- edges (E1.L2.C, E2.L2.C) of the second layer associated with this channel, which are arranged parallel to the first axis (X-X) and transverse to the plane of this second layer, these edges being formed by strips (B1.L2.C, B2.L2.C; B1, B2) of this second layer that are fusion welded to the first and third layers associated with this channel over fusion zones (Z1.C, Z2.C, Z3.C, Z4.C) that extend continuously over the entire length of the channel between its opposite ends and that are located, along a third axis (Y-Y) perpendicular to the first and second axes, on either side of the channel,
**characterized in that** each layer of the plurality of layers is made up of metal strips (B; B1, B2) such that the strips of a same layer all extend lengthwise along a direction perpendicular to the second axis (Z-Z) and are adjacent to one another, without necessarily touching, in the plane of the considered layer, each of the strips of each layer of the plurality of layers occupying the entire thickness, along the second axis (Z-Z), of the corresponding layer.

2. The heat exchanger (100; 200) according to claim 1, **characterized in that** the second layer (L2.C) associated with each channel (C) has a thickness that is less than or equal to 0.1 mm, and **in that** the edges (E1.L2.C, E2.L2.C) associated with each channel are distant, along the third axis (Y-Y), by 1 mm or less than 1 mm.

3. The heat exchanger (100; 200) according to one of claims 1 or 2, **characterized in that** the face (F.L1 .C) of the first layer (L1.C) and the face (F.L3.C) of the third layer (L3.C) that are associated with each channel (C) have a surface roughness Ra less than or equal to 0.8 µm.

4. The heat exchanger (100; 200) according to claim 3, **characterized in that** the edges (E1.L2.C, E2.L2.C) associated with each channel (C) have a surface roughness Ra less than or equal to 0.8 µm.

5. The heat exchanger (100; 200) according to one of claims 1 or 2, **characterized in that** the face (F.L1 .C) of the first layer (L1.C) and the face (F.L3.C) of the third layer (L3.C) that are associated with each channel (C), as well as the edges (E1.L2.C, E2.L2.C) associated with this channel have a surface roughness Ra less than or equal to 0.3 µm.

6. The heat exchanger (100) according to any one of the preceding claims,
**characterized in that** said channels are first channels (C) for circulation of a first fluid,
**in that** for each first channel (C), the strips of the second layer (L2.C) associated with this first channel, which form the edges (E1.L2.C, E2.L2.C) delimiting the first channel at this second layer, are a first strip (B1.L2.C) and a second strip (B2.L2.C) that extend lengthwise along the first axis (X-X) and respectively on either side, along the third axis (Y-Y), of the first channel, and
**in that** the heat exchanger (100) includes at least one second channel (C') for circulation of a second fluid:
- that extends lengthwise along the first axis (X-X) between respective opposite ends of the second channel,
- in which the second fluid is intended to flow between the ends of the second channel along the first axis, and
- that is arranged at a same level, along the second axis (Z-Z), as at least some of the first channels (C), while being partially delimited by the first or the second strip (B1.L2.C, B2.L2.C) of the second layers (L2.C) associated with said at least some of the first channels.

7. The heat exchanger (100) according to claim 6, **characterized in that**, for each first channel (C), the face (F.L1.C) of the first layer (L1.C) associated with this first channel is formed by a strip (B1.L1.C) of this first layer, which extends lengthwise along the first axis (X-X) and which, along the third axis (Y-Y), overflows on either side of this first channel so as to be both superimposed with and welded on the corresponding fusion zones (Z1.C, Z2.C) with the first and second strips (B1.L2.C, B2.L2.C) of the second layer (L2.C) associated with this first channel, and
**in that**, for each first channel, the face (F.L3.C) of the third layer (L3.C) associated with this first channel is formed by a strip (B1.L3.C) of this third layer, which extends lengthwise along the first axis (X-X) and which, along the third axis (Y-Y), overflows on either side of this first channel so as to be both superimposed with and welded on the corresponding fusion zones (Z3.C, Z4.C) with the first and second strips of the second layer associated with this first channel.

8. The heat exchanger (100) according to one of claims 6 or 7, **characterized in that** the or each second channel (C') is defined jointly by first and second layers and a group of superimposed layers among the plurality of layers (L), the group of superimposed layers (GL.C') associated with this second channel being intercalated, along the second axis (Z-Z), directly between the first layer (L1.C') and the second layer (L2.C') associated with this second channel, such that the or each second channel is delimited by:
- a face (FL1.C') of the first layer associated with this second channel, which faces, along the second axis, toward the third layer and the group of superimposed layers (GL.C') associated with the second channel,
- a face (FL2.C') of the second layer associated with this second channel, which faces, along the second axis, toward the first layer and the group of superimposed layers associated with the second channel, and
- edges (E1.GL.C', E2.GL.C') of the group of superimposed layers (GL.C') associated with this second channel, which are each arranged parallel to the first axis (X-X) and transverse to respective planes of the layers of this group of superimposed layers, these edges being formed by strips of the layers of the group of superimposed layers, which:
- extend lengthwise along the first axis (X-X),
- are, at each of the layers of the group of superimposed layers, fusion welded to the layer(s) of said group, which are immediately superimposed on the considered layer, or otherwise, to the first layer or to the second layer, over fusion zones that extend continuously over the entire length of the second channel between the opposite ends of this second channel and that are located, along the third axis (Y-Y), on either side of this second channel, and
- include the first and/or second strips (B1.L2.C, B2.L2.C) of the second layer (L2.C) of each of said at least some first channels (C).

9. A method for manufacturing a heat exchanger (100) according to any one of claims 6 to 8,
wherein the layers (L) of the plurality of layers of the heat exchanger (100) are made one after the other such that each layer of the plurality of layers, which is newly made, is superimposed, along the second axis (Z-Z), on a layer of the plurality of layers, previously made, or, in the absence of this layer previously made, on a flat metal substrate (P) that is perpendicular to the second axis,
wherein, to produce each first channel, it is successively provided that:
i) after having deposited the first layer (L1.C) associated with this first channel, this first layer is flattened on its face facing, along the second axis (Z-Z), away from a layer previously made or, in the absence of the latter, opposite the substrate (P),
ii) the first and second strips (B1.L2.C, B2.L2.C) of the second layer (L2.C) associated with this first channel are deposited on this first layer, while extending lengthwise along the first axis (X-X) and respectively on either side, along the third axis (Y-Y), of the first channel to be made, and are fusion welded with this first layer on the fusion zones (Z1.C, Z2.C) for these first and second layers,
iii) this second layer is flattened on its face facing, along the second axis (Z-Z), away from the first layer, and
iv) the third layer associated with this first channel is deposited on the first and second strips of the second layer and fusion welded with these strips on the fusion zones (Z3.C, Z4.C) for the second and third layers,
and wherein at least some of the first channels are made one after the other, by using the third layer of a first channel previously made as first layer of a first channel to be made and by repeating steps i), ii), iii) and iv).

10. The heat exchanger (200) according to any one of claims 1 to 5, **characterized in that**, for each channel, the strips of the first layer associated with this channel, the strips of the second layer associated with this channel and the strips of the third layer associated with this channel extend lengthwise along the third axis (Y-Y) and are distributed into first strips (B1) made from a first metal and second strips (B2) made from a second metal, the first metal having a thermal conductivity different from that of the second metal, these first and second strips being, at each of the first, second and third layers associated with the channel, arranged alternating along the first axis (X-X) such that the first strips (B1) of the first, second and third layers associated with the channel are superimposed along the second axis (Z-Z) and the second strips (B2) of the first, second and third layers associated with the channel are superimposed along the second axis,
and **in that** for each channel, each of the first and second strips (B1, B2) of the second layer (L2.C) associated with this channel is locally interrupted, along its length, so as to form the edges (E1.L2.C, E2.L2.C) delimiting this channel.

11. The heat exchanger (200) according to claim 10, **characterized in that**, for each channel (C):
- each of the first strips (B1) of the second layer (L2.C) associated with this channel is completely fusion welded both with the first strip of the first layer associated with the channel, with which this first strip of the second layer is superimposed, and with the first strip of the third layer (L3.C), with which this first strip of the second layer is superimposed, forming the fusion zones (Z1.C, Z2.C) for the first and second layers, and
- each of the second strips (B2) of the second layer associated with this channel is completely fusion welded both with the second strip of the first layer associated with this channel, with which this second strip of the second layer is superimposed, and with the second strip of the third layer associated with this channel, with which this second strip of the second layer is superimposed, forming the fusion zones (Z3.C, Z4.C) for the second and third layers.

12. The heat exchanger (200) according to one of claims 10 or 11,
**characterized in that** said channels are first channels (C) for circulation of the fluid,
and **in that** the heat exchanger (200) further includes at least one second channel (C') for thermal insulation:
- that extends lengthwise along the first axis (X-X) between respective opposite ends of this second channel,
- in which a thermal insulator is received, and
- that is arranged at a same level, along the second axis (Z-Z), as at least some of the first channels (C), while being delimited by the first and second strips (B1, B2) of the first, second and third layers of said at least some first channels.

13. A method for manufacturing a heat exchanger (200) according to any one of claims 10 to 12,
wherein the layers of the plurality of layers of the heat exchanger (200) are made one after the other such that each layer of the plurality of layers, which is newly made, is superimposed, along the second axis (Z-Z), on a layer of the plurality of layers, which is previously made, or, in the absence of this layer previously made, on a flat metal substrate (P) that is perpendicular to the second axis,
wherein, to produce each channel, it is successively provided that:
i) after having deposited the first and second strips (B1, B2) of the first layer (L1.C) associated with this channel, this first layer is flattened on its face facing, along the second axis (Z-Z), away from the layer previously made or, in the absence of the latter, opposite the substrate (P),
ii) the first strips (B1) of the second layer (L2.C) associated with this channel are deposited on and are fusion welded with the first strips of this first layer and the second strips (B2) of this second layer are deposited on and are fusion welded with the second strips of this first layer, while forming the fusion zones (Z1.C, Z2.C) for the first and second layers,
iii) this second layer is flattened on its face facing, along the second axis, away from this first layer, and the channel to be made is machined by removal of material in this second layer by interrupting each of the first and second strips (B1, B2) of this second layer locally along its length, and
iv) the first strips (B1) of the third layer associated with this channel are deposited on and are fusion welded with the first strips of this second layer and the second strips (B2) of this third layer are deposited on and are fusion welded with the second strips of this third layer, while forming the fusion zones (Z3.C, Z4.C) for the second and third layers,
and wherein at least some of the channels (C) are made one after the other, by using the third layer of a channel previously made as first layer of a channel to be made and by repeating steps i), ii), iii) and iv).

14. The method according to claim 13, wherein during steps ii) and iv), the first strips (B1) and the second strips (B2) are deposited such that a lateral fringe of each strip overlaps, along the second axis (Z-Z), the strip that extends along this lateral fringe.
